# EUROPÄISCHE PATENTSCHRIFT

(11) **EP 2 438 324 B1**
(45) Veröffentlichungstag und Bekanntmachung des Hinweises auf die Patenterteilung: **17.07.2013**
(21) Anmeldenummer: 10720611.2
(22) Anmeldetag: 19.05.2010
(51) Int. Cl.: F16H 3/66, F16H 57/08

(54) **RADSATZANORDNUNG EINES PLANETENGETRIEBES**
GEAR SET ARRANGEMENT OF A PLANETARY TRANSMISSION
ENSEMBLE DE TRAINS D'UNE BOITE DE VITESSES A TRAINS EPICYCLOIDAUX

(30) Priorität: 04.06.2009 DE 102009026703
(43) Veröffentlichungstag der Anmeldung: 11.04.2012
(73) Patentinhaber: ZF Friedrichshafen AG, 88038 Friedrichshafen (DE)
(72) Erfinder: ZIEMER, Peter, 88069 Tettnang (DE); DOEPFERT, Hagen, 88131 Lindau (DE); KEMMER, Jürgen, 88124 Ravensburg (DE)
(86) Internationale Anmeldenummer: PCT/EP2010/056903
(87) Internationale Veröffentlichungsnummer: WO 2010/139553

(56) Entgegenhaltungen:
- EP-A1- 1 832 782
- WO-A1-2005/120877
- US-A- 5 429 557
- US-A1- 2008 269 004

## Beschreibung

Die Erfindung betrifft eine Radsatzanordnung eines Planetengetriebes, beispielsweise eines Kraftfahrzeug-Automatgetriebes, mit mindestens zwei einfachen Planetenradsätzen, die jeweils ein Sonnenrad, ein Hohlrad und einen mehrere Planetenräder tragenden Steg umfassen, und die mit einer koaxialen Schachtelanordnung eines der Planetenradsätze radial innerhalb des Sonnenrades des anderen Planetenradsatzes in einer gemeinsamen Radialebene oder in axial geringfügig zueinander versetzten Radialebenen angeordnet sind, wobei zum einen das Hohlrad des radial inneren Planetenradsatzes sowie das Sonnenrad des radial äußeren Planetenradsatzes und zum anderen die Stege beider Planetenradsätze jeweils drehfest miteinander gekoppelt sind.

Modernere Automatgetriebe von Kraftfahrzeugen bestehen zur Realisierung mehrerer Gangstufen üblicherweise aus mehreren Planetenradsätzen, die als einfache Planetenradsätze und/oder als zusammengesetzte Planetenradsätze, wie z.B. als Simpson-Radsatz oder als Ravigneaux-Radsatz, ausgebildet sein können. Die Bauteile dieser Planetenradsätze, wie Sonnenräder, Hohlräder und Stege (Planetenträger), sind zum Teil drehfest miteinander gekoppelt oder über zugeordnete Reibschaltelemente, die bevorzugt als Lamellenkupplungen und Lamellenbremsen ausgebildet sind, selektiv, d.h. zur Schaltung jeweils einer bestimmten Gangstufe, mit einer Eingangswelle, einer Ausgangswelle oder miteinander koppelbar, oder gegenüber dem Getriebegehäuse arretierbar.

Mit der Forderung nach einem möglichst permanenten Betrieb des Antriebsmotors in einem Drehzahlbereich mit einem geringen spezifischen Kraftstoffverbrauch werden jedoch immer mehr Gangstufen erforderlich, was zwangsläufig mit einer Erhöhung der Anzahl der in einem Automatgetriebe vorzusehenden Planetenradsätze verbunden ist. Bei der üblichen axial benachbarten Anordnung der Planetenradsätze führt dies jedoch zu einer erhöhten axialen Baulänge der Automatgetriebe, wodurch insbesondere ein Front-Quereinbau der aus dem Antriebsmotor und dem Automatgetriebe gebildeten Antriebseinheit erschwert oder sogar verhindert wird.

Es sind daher mehrere Konzepte für mehrstufige Automatgetriebe mit mindestens zwei einfachen Planetenradsätzen vorgeschlagen worden, bei denen einer dieser Planetenradsätze koaxial bzw. radial innerhalb des Sonnenrades des anderen Planetenradsatzes angeordnet ist. Hierdurch können beide Planetenradsätze in einer gemeinsamen Radialebene oder in axial geringfügig zueinander versetzten Radialebenen angeordnet werden, so dass gegenüber einer axial benachbarten Anordnung eine Radsatzebene eingespart und somit die axiale Baulänge des jeweiligen Automatgetriebes verringert ist.

Ein erstes Automatgetriebe mit einer radial geschachtelten Anordnung von zwei einfachen Planetenradsätzen ist aus der US 5 429 557 A bekannt, die als nächster Stand der Technik angesehen wird. Die beiden Planetenradsätze sind koaxial über der Ausgangswelle angeordnet und bilden den Hauptradsatz dieses bekannten Automatgetriebes. Das Hohlrad des radial inneren Planetenradsatzes und das Sonnenrad des radial äußeren Planetenradsatzes sind einstückig ausgebildet, d.h. in einem gemeinsamen Zahnradbauteil zusammengefasst. Die Stege beider Planetenradsätze sind starr miteinander verbunden und stehen mit der Ausgangswelle des Getriebes in Triebverbindung.

In einer ersten Ausführungsform dieses bekannten Automatgetriebes sind sechs Vorwärtsgänge und ein Rückwärtsgang über drei Schaltkupplungen und zwei Schaltbremsen schaltbar, wobei eine eingangsseitige Triebverbindung mit der achsparallel zu der Ausgangswelle angeordneten Eingangswelle jeweils über eine erste Eingangsstufe mit einer Underdrive-Übersetzung und/oder über eine zweite Eingangsstufe mit einer Overdrive-Übersetzung hergestellt wird. In einer zweiten Ausführungsform dieses Automatgetriebes sind sechs Vorwärtsgänge und ein Rückwärtsgang über zwei Schaltkupplungen und drei Schaltbremsen schaltbar, wobei die eingangsseitige Triebverbindung mit der Eingangswelle jeweils über eine einzige Eingangsstufe mit einer Underdrive-Übersetzung und bedarfsweise über einen dem Hauptradsatz vorgeschalteten einfachen Planetenradsatz hergestellt wird.

Ein zweites Automatgetriebe mit einer radial geschachtelten Anordnung von zwei einfachen Planetenradsätzen ist in der DE 10 2005 014 592 A1 in mehreren Ausführungen beschrieben. Dieses bekannte Automatgetriebe weist vier miteinander gekoppelte einfache Planetenradsätze auf. Zwei dieser Planetenradsätze sind in einer gemeinsamen Radialebene angeordnet, wobei der eine Planetenradsatz radial innerhalb des Sonnenrades des anderen Planetenradsatzes des Vorschaltradsatzes angeordnet ist. Das Hohlrad des radial inneren Planetenradsatzes und das Sonnenrad des radial äußeren Planetenradsatzes sind vorzugsweise durch eine einstückige Bauweise starr miteinander gekoppelt. Bei diesem bekannten Automatgetriebe sind acht Vorwärtsgänge und ein Rückwärtsgang über drei Schaltkupplungen und zwei Schaltbremsen schaltbar.

Ein weiteres Automatgetriebe mit einer radial geschachtelten Anordnung von zwei einfachen Planetenradsätzen ist Gegenstand der nicht vorveröffentlichten DE 10 2008 000 429.4 der Anmelderin. Das dort in mehreren Ausführungsformen beschriebene Automatgetriebe weist jeweils einen Vorschaltradsatz und einen Hauptradsatz auf. Während der Vorschaltradsatz in allen Ausführungsformen aus zwei gekoppelten einfachen Planetenradsätzen besteht, wird der Hauptradsatz entweder aus zwei gekoppelten einfachen Planetenradsätzen oder aus einem Ravigneaux-Radsatz gebildet.

Die beiden Planetenradsätze des Vorschaltradsatzes sind in einigen Ausführungen in axial geringfügig zueinander versetzten Radialebenen und in anderen Ausführungen in einer gemeinsamen Radialebene angeordnet, wobei der erste Planetenradsatz radial innerhalb des Sonnenrades des zweiten Planetenradsatzes angeordnet ist. Das Hohlrad des radial inneren Planetenradsatzes und das Sonnenrad des radial äußeren Planetenradsatzes sind starr miteinander verbunden.

Die Stege beider Planetenradsätze sind ebenfalls starr miteinander verbunden und je nach Ausführung mit dem Hohlrad des ersten Planetenradsatzes des Hauptradsatzes, dem Sonnenrad des ersten Planetenradsatzes des Hauptradsatzes, dem kleinen Sonnenrad des Ravigneaux-Radsatzes oder mit dem großen Sonnenrad des Ravigneaux-Radsatzes drehfest gekoppelt. Bei den Ausführungen dieses Automatgetriebes sind jeweils neun Vorwärtsgänge und ein Rückwärtsgang über drei Schaltkupplungen und drei Schaltbremsen schaltbar, wobei zur Vermeidung von Schleppmomenten geöffneter Reibschaltelemente jeweils eine Schaltkupplung und eine Schaltbremse als Klauenkupplungen ausgebildet sind.

Bei der beschriebenen radial geschachtelten Anordnung von zwei einfachen Planetenradsätzen ist die Zentrierung der Bauteile aufgrund der radialen Ausdehnung der Bauteile, der zum Teil auftretenden hohen Drehzahlen und der teilweise hohen Bauteilmassen problematisch. So ist das Verhältnis der Teilkreisdurchmesser des äußeren Hohlrades, d.h. des Hohlrades des radial äußeren Planetenradsatzes, und des inneren Sonnenrades, d. h. des Sonnenrades des radial inneren Planetenradsatzes, bei der vorliegend betrachteten koaxialen Schachtelanordnung größer als 3,5.

Außerdem ergibt sich bei einer derartigen Anordnung von zwei Planetenradsätzen als Vorschaltradsatz eines Automatgetriebes gemäß der nicht vorveröffentlichten DE 10 2008 000 429.4 zum Beispiel bei geschaltetem vierten Vorwärtsgang eine Drehzahlüberhöhung des gekoppelten Steges der beiden Planetenradsätze von etwa 1,38, des äußeren Hohlrades von etwa 1,63 und des inneren Sonnenrades von etwa 2,13 gegenüber der mit dem Antriebsmotor in Triebverbindung stehenden Eingangswelle.

Aufgrund der relativ großen radialen und umfangsseitigen Ausdehnung der radial äußeren Bauteile, insbesondere des gekoppelten Steges der beiden Planetenradsätze und des äußeren Hohlrades, weisen diese Bauteile zudem zwangsläufig relativ hohe Massen auf.

Während zur Zentrierung eines einzelnen einfachen Planetenradsatzes bekanntlich die Radiallagerung eines einzigen Bauteils, wie des Sonnenrades, eines starr mit dem Hohlrad verbundenen Hohlradträgers, oder des Steges, z. B. auf einer zentral angeordneten Getriebewelle mit geringem Radialspiel ausreicht, ist dies bei der vorliegend betrachteten radialen Schachtelanordnung von zwei einfachen Planetenradsätzen aus den genannten Gründen in dieser Form nicht ohne weiteres möglich. So können fertigungsbedingte Exzentrizitäten oder Asymmetrien von Bauteilen bei schweren oder schnell rotierenden Bauteilen zu einem unrundem Lauf, zu erhöhtem Verschleiß insbesondere der Verzahnungen und zu erhöhten Laufgeräuschen führen. Ebenfalls können die schwereren Bauteile, insbesondere die gekoppelten Stege und das äußere Hohlrad, bei Rotationsstillstand durch ihr Gewicht soweit radial nach unten rutschen, dass eine Selbstzentrierung dieser Bauteile beim nächsten Rotationsbeginn nur mit starker Verzögerung möglich ist.

Eine bekannte Lageranordnung von zwei radial geschachtelt angeordneten einfachen Planetenradsätzen ist beispielsweise in Fig. 1 der bereits genannten US 5 429 557 A dargestellt. In der dort abgebildeten Schnittansicht der ersten Ausführungsform des betreffenden Automatgetriebes ist das Sonnenrad des radial inneren Planetenradsatzes starr mit einer als Hohlwelle ausgebildeten Zwischenwelle verbunden und zusammen mit dieser über Nadellager auf der zentral angeordneten Ausgangswelle gelagert.

Auf der axial gegenüberliegenden Seite der beiden Planetenradsätze sind die beiden starr miteinander gekoppelten Stege über eine Lagernabe des Steges des radial inneren Planetenradsatzes über mindestens ein Nadellager auf der Ausgangswelle gelagert. Das einstückig ausgebildete Zahnradbauteil, in dem das Hohlrad des radial inneren Planetenradsatzes und das Sonnenrad des radial äußeren Planetenradsatzes zusammengefasst sind, ist starr mit dem Innenlamellenträger einer axial benachbarten Schaltkupplung verbunden und über diesen mittels einer Gleitlagerhülse auf einer Lagernabe des Abtriebsrades der ersten Eingangsstufe gelagert. Das Abtriebsrad dieser ersten Eingangsstufe ist wiederum über zwei Nadellager auf dem Sonnenrad des radial inneren Planetenradsatzes und der mit diesem verbundenen Zwischenwelle gelagert.

Das Hohlrad des radial äußeren Planetenradsatzes ist starr mit dem Abtriebsrad der zweiten Eingangsstufe verbunden, das seinerseits über zwei Nadellager auf der Lagernabe des Steges des radial inneren Planetenradsatzes gelagert ist.

Aufgrund der Radiallagerung aller Bauteile dieser beiden Planetenradsätze sind diese bezüglich ihrer Verzahnungen zwangsgeführt. Zudem ergeben sich für einige Bauteile aufgrund der Mehrfachstaffelung der Radiallagerungen ungünstig lange Toleranzketten. Bei nur geringer Exzentrizität oder Unrundheit eines Bauteils einer der beiden Planetenradsätze kommt es somit zwangsläufig zu radialen Verspannungen und zu unrundem Lauf in Verbindung mit erhöhtem Verschleiß der Radiallager sowie der Verzahnungen und zu erhöhten Laufgeräuschen.

Vor diesem Hintergrund liegt der vorliegenden Erfindung die Aufgabe zugrunde, ein Zentrierlagerkonzept für zwei in der eingangs genannten Art radial und axial geschachtelt angeordnete einfache Planetenradsätze vorzuschlagen, mit dem die vorgenannten Nachteile in Verbindung mit einer einfachen und Platz sparenden Bauweise vermieden werden können.

Eine erste erfindungsgemäße Lösung der Aufgabe besteht in Verbindung mit den Merkmalen des Oberbegriffs des Anspruchs 1 darin, dass jeweils nur ein Bauteil jedes der beiden Planetenradsätze, nämlich das Sonnenrad, das Hohlrad oder der Steg, weitgehend radialspielfrei auf einer zentral angeordneten Getriebewelle oder gegenüber einem zentriert gelagerten Bauteil radial gelagert ist.

Die Erfindung geht daher aus von einer Radsatzanordnung eines Planetengetriebes, beispielsweise eines Kraftfahrzeug-Automatgetriebes, mit mindestens zwei einfachen Planetenradsätzen, die jeweils ein Sonnenrad, ein Hohlrad und einen mehrere Planetenräder tragenden Steg umfassen, und die mit einer koaxialen Schachtelanordnung eines der Planetenradsätze radial innerhalb des Sonnenrades des anderen Planetenradsatzes in einer gemeinsamen Radialebene oder in axial geringfügig zueinander versetzten Radialebenen angeordnet sind. Zudem ist bei dieser Radsatzanordnung vorgesehen, dass zum einen das Hohlrad des radial inneren Planetenradsatzes, das nachfolgend als inneres Hohlrad bezeichnet wird, sowie das Sonnenrad des radial äußeren Planetenradsatzes, das nachfolgend als äußeres Sonnenrad bereichnet wird, und zum anderen die Stege beider Planetenradsätze jeweils drehfest miteinander gekoppelt sind.

Erfindungsgemäß ist bei dieser Radsatzanordnung eines Planetengetriebes jeweils nur ein Bauteil jedes Planetenradsatzes auf einer zentral angeordneten Getriebewelle, bei der es sich üblicherweise um eine Eingangs- oder Ausgangswelle des Planetengetriebes handelt, oder auf oder in einem vorzugsweise auf der zentralen Getriebewelle zentriert gelagerten Bauteil, wie z. B. einem auf der zentralen Getriebewelle radial gelagerten Bauteil eines der beiden Planetenradsätze oder eines weiteren, axial benachbart angeordneten Planetenradsatzes, radial gelagert und damit zentriert. Die übrigen zwei Bauteile jedes Planetenradsatzes werden ohne besondere Radiallagerungen über die jeweiligen Verzahnungen selbsttätig zentriert. Somit ist in beiden Planetenradsätzen jeweils ein Zwangslauf der Zahnräder ausgeschlossen, wodurch die eingangs beschriebenen Verschleiß- und Laufgeräuschprobleme vermieden werden.

Da insbesondere die schweren Bauteile, wie die beiden gekoppelten Stege und das nachfolgend als äußeres Hohlrad bezeichnete Hohlrad des radial äußeren Planetenradsatzes, zur Vermeidung der eingangs erläuterten Probleme bei Rotationsstillstand und bei Rotationsbeginn, sowie die schnell rotierenden Bauteile, wie die beiden gekoppelten Stege, das nachfolgend als inneres Sonnenrad bezeichnete Sonnenrad des radial inneren Planetenradsatzes und das äußere Hohlrad, zweckmäßig radial gelagert oder zumindest mit einer radialen Führung versehen sein sollten, besteht eine zweite Lösung der Aufgabe darin, dass mindestens zwei Bauteile, nämlich das Sonnenrad, das Hohlrad und/oder der Steg, von einem der beiden Planetenradsätze jeweils auf einer zentral angeordneten Getriebewelle oder gegenüber einem zentriert gelagerten Bauteil radial gelagert sind, wobei zumindest ein Bauteil (Sonnenrad und/oder Hohlrad und/oder Steg) des anderen Planetenradsatzes radial auf einer zentral angeordneten Getriebewelle oder gegenüber einem zentral gelagerten Bauteil radial gelagert ist.

Hierdurch ist sichergestellt, dass die schweren Bauteile entweder selbst radial gelagert sind oder über die Verzahnung mit einem oder zwei radial gelagerten Bauteilen des jeweiligen Ptanetenradsatzes hinreichend radial geführt sind, um ein radial tiefes Durchfallen in den Verzahnungen bei Rotationsstillstand zu vermeiden und ein selbsttätiges Zentrieren bei Rotationsbeginn zu ermöglichen. Ebenso werden durch diese Konstruktion die Unwuchten durch fertigungsbedingte Exzentrizitäten oder Unrundheiten der schnell rotierenden Bauteile weitgehend kompensiert oder zumindest abgeschwächt.

Liegt der Schwerpunkt der Radiallagerung der beiden Planetenradsätze gemäß der zweiten Lösung bei der Vermeidung von Zwangslauf, ist gemäß einer Weiterbildung der Erfindung bei jedem der beiden Planetenradsätze die Radiallagerung des einen Bauteils weitgehend radialspielfrei und die Radiallagerung des anderen Bauteils mit Radialspiel ausgeführt.

Wenn bei der zweiten Lösung jedoch vorrangig die Vermeidung von Unwuchten erreicht werden soll, sind hierzu zumindest bei einem der beiden Planetenradsätze, aufgrund der hohen Massen bevorzugt bei dem radial äußeren Planetenradsatz, zweckmäßig die Radiallagerungen beider Bauteile weitgehend radialspielfrei ausgeführt.

Bei dem erfindungsgemäßen Zentrierlagerkonzept kann jeweils vorgesehen sein, dass das innere Hohlrad und das äußere Sonnenrad in einem gemeinsamen Zahnradbauteil starr miteinander verbunden sowie drehfest und weitgehend radialspielfrei mit einem Träger gekoppelt sind, der an einer zugeordneten Lagernabe auf der zentralen Getriebewelle oder auf einem Lagerschaft eines zentral gelagerten Bauteils eines der beiden Planetenradsätze oder einer axial benachbarten Baugruppe, wie z. B. auf einem Lagerschaft eines Bauteils eines axial benachbarten weiteren Planetenradsatzes oder eines Lamellenträgers eines axial benachbart angeordneten Reibschaltelementes, radial gelagert ist. Durch die zentrale Lage des inneren Hohlrades und des äußeren Sonnenrades zwischen den beiden Planetenradsätzen sind bei starrer Verbindung, d.h. drehfester sowie axial- und radialspielfreier Koppelung beider Bauteile, die vorzugsweise durch eine einstückige Bauweise erreicht wird, beide Bauteile Platz sparend über ein einziges Radiallager zentrierbar.

Die radialspielfreie Verbindung des gemeinsamen Zahnradbauteils, also des kombinierten Sonnenrads/Hohlrads, mit dem Träger kann dadurch erreicht sein, dass das gemeinsame Zahnradbauteil über eine weitgehend radialspielfreie Mitnahmeverzahnung oder über eine Schweißverbindung mit dem Träger gekoppelt ist.

Bei dem ersten erfindungsgemäßen Zentrierlagerkonzept ist es alternativ und bei dem zweiten Zentrierlagerkonzept zusätzlich möglich, dass der innere Steg und der äußere Steg zu einem gemeinsamen Steg starr miteinander verbunden sind, und dass der gemeinsame Steg an einer zugeordneten Lagernabe auf der zentralen getriebewelle oder auf einem Lagerschaft eines zentral gelagerten Bauteils eines der beiden Planetenradsätze oder einer axial benachbarten Baugruppe radial gelagert ist. Durch eine Radiallagerung der bevorzugt durch einstückige Bauweise in dem gemeinsamen Steg starr gekoppelten Stege des radial inneren Planetenradsatzes (innerer Steg) und des radial äußeren Planetenradsatzes (äußerer Steg) ist ebenfalls jeweils ein Bauteil der beiden Planetenradsätze, die zudem einzeln wie auch gekoppelt die höchsten Massen aufweisen, Platz sparend über ein einziges Radiallager zentrierbar.

Der gemeinsame Steg ist bevorzugt auf einem Lagerschaft des mit dem inneren Hohlrad und dem äußeren Sonnenrad bzw. dem gemeinsamen Zahnradbauteil drehfest gekoppelten Trägers oder auf einem Lagerschaft eines Steges eines weiteren axial benachbarten Planetenradsatzes radial gelagert.

Als Alternative einer Radiallagerung von zwei gekoppelten Bauteilen kann jedoch auch vorgesehen sein, dass das innere Sonnenrad auf der zentral angeordneten Getriebewelle oder auf einem Lagerschaft einer axial benachbarten Baugruppe radial gelagert ist, und dass das äußere Hohlrad über eine Mitnahmeverzahnung mit einem Hohlradträger drehfest gekoppelt ist, der mit einer radial innen angeordneten Lagernabe auf der zentralen Getriebewelle oder auf einem Lagerschaft eines zentral gelagerten Bauteils eines der beiden Planetenradsätze oder einer axial benachbarten Baugruppe radial gelagert ist.

Die jeweilige Radiallagerung kann in an sich bekannter Weise in Form eines zwischen der jeweiligen Lagernabe und der zentralen Getriebewelle oder dem Lagerschaft des zentriert gelagerten Bauteils angeordneten Nadellagers oder einer Gleitlagerbuchse ausgeführt sein, wobei zur Vermeidung von Taumelbewegungen des betreffenden Bauteils auch eine zweireihige Ausführung des Radiallagers sinnvoll ist.

Eine besonders kostengünstige und Platz sparende Radiallagerung des inneren Sonnenrades ist jedoch derart möglich, dass das innere Sonnenrad aus Stahl besteht und unmittelbar auf einer Lagerhülse aus Aluminium oder einem Bauteil einer axial benachbarten Baugruppe aus Aluminium, wie z. B. einem Lamellenträger eines axial benachbarten Reibschaftelementes, radial gelagert ist, wobei die Lagerhülse bzw. das Bauteil drehfest und weitgehend radialspielfrei auf der zentralen Getriebewelle angeordnet ist.

In diesem Fall ist es auch möglich, dass der Hohlradträger des äußeren Hohlrades aus Aluminium besteht und mit seiner zugeordneten Lagernabe unmittelbar auf einem Lagerschaft des inneren Sonnenrades radial gelagert ist.

Nachfolgend werden nun vorteilhafte Ausführungen von Mehrfachlagerungen vorgestellt, die als Ausgestaltungsformen, zur Ergänzung oder als Alternativen der zuvor genannten Radiallagerungen der beiden Planetenradsätze verwendet werden können.

Bei einer bevorzugten Mehrfachlagerung, die auf der Zentrallagerung des gemeinsamen Zahnradbauteils basiert, ist die Radiallagerung des gemeinsamen Steges derart ausgebildet, dass der gemeinsame Steg mit einer zugeordneten Lagernabe auf einem Lagerschaft des über den Träger zentriert gelagerten gemeinsamen Zahnradbauteils radial gelagert ist. Diese Lagerung des gemeinsamem Steges ist besonders einfach und Platz sparend bei axial leicht versetzten Radialebenen der beiden Planetenradsätze realisierbar, da der Lagerschaft in diesem Fall Platz sparend in dem überdeckungsfreien Bereich des inneren Hohlrades angeordnet werden kann.

Bei dieser Lageranordnung kann auch der Hohlradträgerdes äußeren Hohlrades radial benachbart zu der Radiallagerung des gemeinsamen Steges mit einer zugeordneten Lagernabe auf einem Lagerschaft des gemeinsamen Steges radial gelagert sein.

Des weiteren ist bei einer derartigen Radiallagerung des Hohlradträgers auch möglich, dass der Hohlradträger aus Aluminium besteht und radial innen mit einer Lagernabe versehen ist, in der das aus Stahl bestehende innere Sonnenrad mit einem Lagerschaft unmittelbar radial gelagert ist.

Eine dazu alternative Radiallagerung des gemeinsamen Steges kann derart realisiert sein, dass dieser an einer zugeordneten Lagernabe auf einem Lagerschaft des zentriert gelagerten Trägers radial gelagert ist.

Alternativ zu einer an sich bekannten Radiallagerung über ein Nadellager oder eine Gleitlagerbuchse kann vorgesehen sein, dass der gemeinsame Steg aus Aluminium besteht und an einer radial innen angeordneten Lagernabe unmittelbar auf einer auf einem Lagerschaft des zentriert gelagerten Trägers abgestützten Winkelscheibe aus Stahl eines zwischen dem Steg und dem Träger angeordneten Axiallagers radial gelagert ist.

Eine ähnliche Radiallagerung des gemeinsamen Steges besteht darin, dass der gemeinsame Steg aus Aluminium besteht und an einer radial innen angeordneten Lagernabe unmittelbar auf einem Lagerschaft des aus Stahl bestehenden Trägers radial gelagert ist.

Eine bevorzugte Mehrfachlagerung, die auf der Zentrallagerung des gemeinsamen Steges basiert, kann eine Radiallagerung des gemeinsamen Zahnradbauteils umfassen, bei der das gemeinsame Zahnradbauteils mit einem zugeordneten Lagerschaft in einer Lagernabe des zentriert gelagerten gemeinsamen Steges radial gelagert ist. Auch bei dieser Lageranordnung kann der Lagerschaft des gemeinsamen Zahnradbauteils bei axial leicht versetzten Radialebenen der beiden Planetenradsätze Platz sparend in dem überdeckungsfreien Bereich des inneren Hohlrades angeordnet werden.

Bei dieser Lageranordnung wie auch bei einer entsprechenden Lageranordnung ohne eine Radiallagerung des gemeinsamen Zahnradbauteils in dem Steg kann der Hohlradträger des äußeren Hohlrades an einer zugeordneten Lagernabe, vorzugsweise radial benachbart zu dem überdeckungsfreien Bereich des inneren Hohlrades, auf einem Lagerschaft des zentriert gelagerten gemeinsamen Steges radial gelagert sein.

Bei den vorgenannten Mehrfachlagerungen, die eine Radiallagerung des über die zugeordnete Mitnahmeverzahnung mit dem Träger gekoppelten gemeinsamen Zahnradbauteils umfassen, ist diese Mitnahmeverzahnung zur Vermeidung von Zwangslauf zweckmäßig mit Radialspiel ausgeführt.

Ebenso kann bei den vorgenannten Mehrfachlagerungen, die eine Radiallagerung des über die zugeordnete Mitnahmeverzahnung mit dem äußeren Hohlrad gekoppelten Hohlradträgers umfassen, auch diese Mitnahmeverzahnung zur Vermeidung von Zwangslauf mit Radialspiel ausgeführt werden.

Bei einer bevorzugten Mehrfachlagerung, die auf der Zentrallagerung des inneren Sonnenrades und des äußeren Hohlrades bzw. des Hohlradträgers des äußeren Hohlrades basiert, ist vorgesehen, dass der gemeinsame Steg mit einem zugeordneten Lagerschaft in einer Lagernabe des zentriert gelagerten Hohlradträgers radial gelagert ist.

Alternativ zu einer konventionellen Lagerung des Hohlradträgers über ein zwischen dem Lagerschaft und der zentralen Getriebewelle oder dem Lagerschaft eines anderen zentriert gelagerten Bauteils angeordnetes Lagerelement, wie ein Nadellager oder eine Gleitlagerbuchse, kann zur Einsparung von Bauraum und zur Vereinfachung der Montage vorgesehen sein, dass der Hohlradträger aus Aluminium besteht und an einer radial innen angeordneten Lagemabe unmittelbar auf einem Lagerschaft des aus Stahl bestehenden und zentriert gelagerten inneren Sonnenrades radial gelagert ist.

Bei einer bevorzugten Mehrfachlagerung, die auf der Zentrallagerung des inneren Sonnenrades basiert, ist eine Radiallagerung des Hohlradträgers vorgesehen, bei welcher der Hohlradträger aus Stahl besteht und an einer radial innen angeordneten Lagernabe unmittelbar auf einer Lagerhülse aus Aluminium radial gelagert ist, die wiederum unmittelbar auf einem Lagerschaft des zentriert gelagerten inneren Sonnenrades aus Stahl radial gelagert ist.

Zur Vermeidung von Drehzahldifferenzen an der Lagerhülse ist diese zweckmäßig über eine Steckverzahnung drehfest mit dem gemeinsamen Steg gekoppelt.

Bei der vorbeschriebenen Ausführung des Hohlradträgers aus Aluminium ist dieser zur Vermeidung von Taumelbewegungen bevorzugt axial innen mit einem Anlaufsteg zur Abstützung gegenüber axial hervorstehenden Planetenbolzen des äußeren Steges versehen, die üblicherweise aus Stahl bestehen.

Eine dazu alternative Radiallagerung des Hohlradträgers kann derart realisiert sein, dass der Hohlradträger aus Stahl besteht und an einer radial innen angeordneten Lagernabe unmittelbar auf einem Lagerschaft eines aus Aluminium bestehenden Lamellenträgers eines axial benachbarten Reibschaltelementes radial gelagert ist, der über eine Mitnahmeverzahnung weitgehend radialspielfrei mit dem inneren Sonnenrad gekoppelt ist.

Bei dieser Lageranordnung kann zudem der gemeinsame Steg gegenüber dem Hohlradträger radial gelagert sein, indem der gemeinsame Steg aus Aluminium besteht und an einer radial innen angeordneten Lagernabe unmittelbar auf einem Lagerschaft des Hohlradträgers radial gelagert ist.

Bei den vorgenannten Lageranordnungen ist das innere Sonnenrad bevorzugt an einer zugeordneten Lagernabe unmittelbar auf einem Lagerschaft eines aus Aluminium bestehenden Lamellenträgers eines axial benachbarten Reibschaltelementes radial gelagert, das über eine Mitnahmeverzahnung weitgehend radialspielfrei mit der zentralen Getriebewelle gekoppelt ist.

Die vorbeschriebenen Zentrierlagerungen sind als bevorzugte Ausführungsformen anzusehen, deren Merkmale in sinnvoller Weise beliebig miteinander kombiniert werden können.

Zur Verdeutlichung der Erfindung ist der Beschreibung eine Zeichnung mit Ausführungsbeispielen beigefügt. In dieser zeigt
- Fig. 1: eine erste erfindungsgemäße Ausführungsform einer einfachen Zentrierlagerung einer Radsatzanordnung eines Getriebes in einem teilweisen Längsmittelschnitt,
- Fig. 2: eine zweite erfindungsgemäße Ausführungsform einer einfachen Zentrierlagerung der Radsatzanordnung in einem teilweisen Längsmittelschnitt,
- Fig. 3: eine dritte erfindungsgemäße Ausführungsform einer einfachen Zentrierlagerung der Radsatzanordnung in einem teilweisen Längsmittelschnitt,
- Fig. 4: eine vierte erfindungsgemäße Ausführungsform einer einfachen Zentrierlagerung der Radsatzanordnung in einem teilweisen Längsmittelschnitt,
- Fig. 5: eine fünfte erfindungsgemäße Ausführungsform einer einfachen Zentrierlagerung der Radsatzanordnung in einem teilweisen Längsmittelschnitt,
- Fig. 6: eine sechste erfindungsgemäße Ausführungsform einer einfachen Zentrierlagerung der Radsatzanordnung in einem teilweisen Längsmittelschnitt,
- Fig. 7: eine siebte erfindungsgemäße Ausführungsform einer einfachen Zentrierlagerung der Radsatzanordnung in-einem teilweisen Längsmittelschnitt,
- Fig. 8: eine erste erfindungsgemäße Ausführungsform einer mehrfachen Zentrierlagerung der Radsatzanordnung in einem teilweisen Längsmittelschnitt,
- Fig. 9: eine zweite erfindungsgemäße Ausführungsform einer mehrfachen Zentrierlagerung der Radsatzanordnung in einem teilweisen Längsmittelschnitt,
- Fig. 10: eine dritte erfindungsgemäße Ausführungsform einer mehrfachen Zentrierlagerung der Radsatzanordnung in einem teilweisen Längsmittelschnitt,
- Fig. 11: eine vierte erfindungsgemäße Ausführungsform einer mehrfachen Zentrierlagerung der Radsatzanordnung in einem teilweisen Längsmittelschnitt,
- Fig. 12: eine fünfte erfindungsgemäße Ausführungsform einer mehrfachen Zentrierlagerung der Radsatzanordnung in einem teilweisen Längsmittelschnitt,
- Fig. 13: eine sechste erfindungsgemäße Ausführungsform einer mehrfachen Zentrierlagerung der Radsatzanordnung in einem teilweisen Längsmittelschnitt,
- Fig. 14: eine siebte erfindungsgemäße Ausführungsform einer mehrfachen Zentrierlagerung der Radsatzanordnung in einem teilweisen Längsmittelschnitt,
- Fig. 15: eine achte erfindungsgemäße Ausführungsform einer mehrfachen Zentrierlagerung der Radsatzanordnung in einem Längsmittelschnitt,
- Fig. 16: eine neunte erfindungsgemäße Ausführungsform einer mehrfachen Zentrierlagerung der Radsatzanordnung in einem teilweisen Längsmittelschnitt,
- Fig. 17: eine zehnte erfindungsgemäße Ausführungsform einer mehrfachen Zentrierlagerung der Radsatzanordnung in einem teilweisen Längsmittelschnitt,
- Fig. 18: eine elfte erfindungsgemäße Ausführungsform einer mehrfachen Zentrierlagerung der Radsatzanordnung in einem teilweisen Längsmittelschnitt,
- Fig. 19: eine zwölfte erfindungsgemäße Ausführungsform einer mehrfachen Zentrierlagerung der Radsatzanordnung in einem teilweisen Längsmittelschnitt,
- Fig. 20: eine dreizehnte erfindungsgemäße Ausführungsform einer mehrfachen Zentrierlagerung der Radsatzanordnung in einem teilweisen Längsmittelschnitt,
- Fig. 21: eine vierzehnte erfindungsgemäße Ausführungsform einer mehrfachen Zentrierlagerung der Radsatzanordnung in einem teilweisen Längsmittelschnitt, und
- Fig. 22: die Schnittansicht von Fig. 14 zur Erläuterung des Gesamtaufbaus des den Figuren 1 bis 21 zugrunde liegenden Planeten-Automatgetriebes.

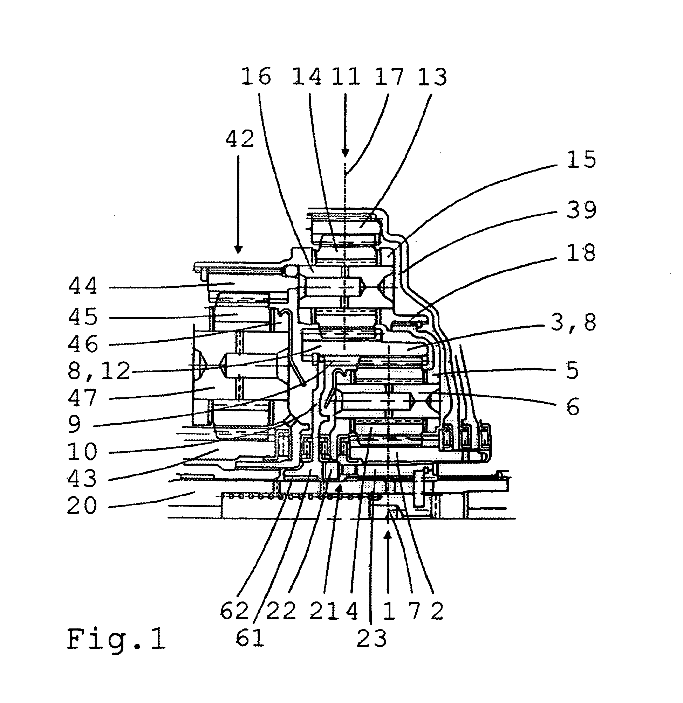

Nachfolgend werden mehrere Ausführungsformen erfindungsgemäßer Zentrierlagerungen der Radsatzanordnung von zwei koaxial geschachtelten Planetenradsätzen beispielhaft anhand eines Planeten-Automatgetriebes gemäß Fig. 1 der nicht vorveröffentlichten deutschen Patentanmeldung DE 10 2008 000 429.4 näher erläutert, bei dem diese Radsatzanordnung einen Vorschaltradsatz bildet.

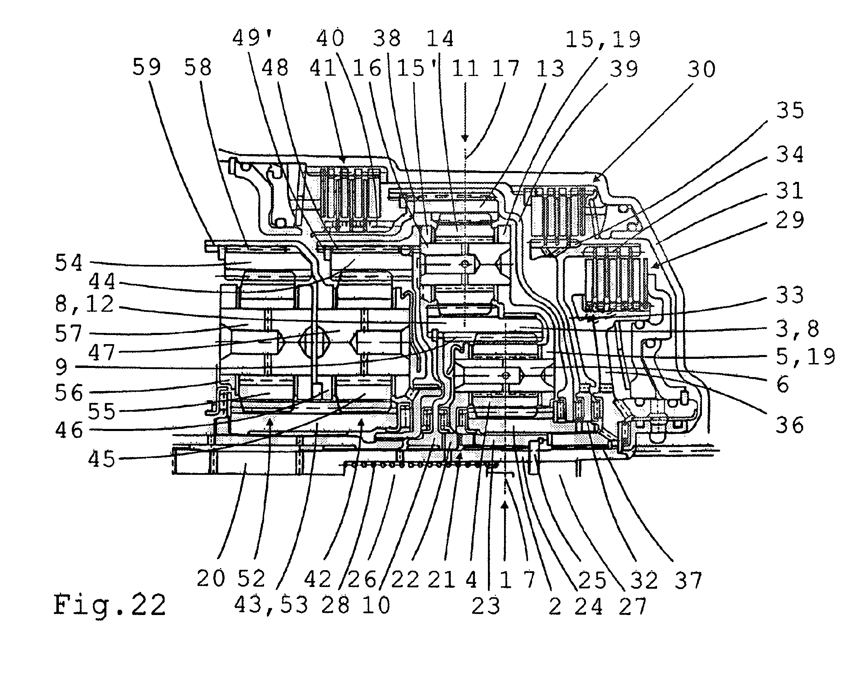

Wie in der weitgehend vollständigen Schnittansicht von Fig. 22 erkennbar ist, besteht der Vorschaltradsatz aus zwei einfachen Planetenradsätzen 1 und 11 mit jeweils einem Sonnenrad 2, 12, einem Hohlrad 3, 13 und einem mehrere Planetenräder 4, 14 tragenden Steg (Planetenträger) 5, 15. Die Planetenräder 4, 14 sind jeweils umfangsseitig verteilt über Planetenbolzen 6, 16 drehbar auf dem zugeordneten Steg 5, 15 gelagert und stehen mit dem zugeordneten Sonnenrad 2, 12 sowie dem zugeordneten Hohlrad 3, 13 in Verzahnungseingriff. Die beiden Planetenradsätze 1, 11 sind mit einer koaxialen Schachtelanordnung des ersten Planetenradsatzes radial innerhalb des Sonnenrades 12 des zweiten Planetenradsatzes 11 in axial geringfügig zueinander versetzten Radialebenen 7, 17 angeordnet.

Das innere Hohlrad 3 und das äußere Sonnenrad 12 sind durch eine einstückige Ausführung in einem gemeinsamen Zahnradbauteil 8 zusammengefasst und somit starr, d.h. drehfest sowie axial- und radialspielfrei, miteinander verbunden. Das gemeinsame Zahnradbauteil 8 ist in den meisten Ausführungen über eine Mitnahmeverzahnung 9 drehfest mit einem scheibenförmigen Träger 10 gekoppelt, der über eine als Klauenkupplung ausgebildete Schaltkupplung 21 mit einer zentral angeordneten Eingangswelle 20 verbindbar ist.

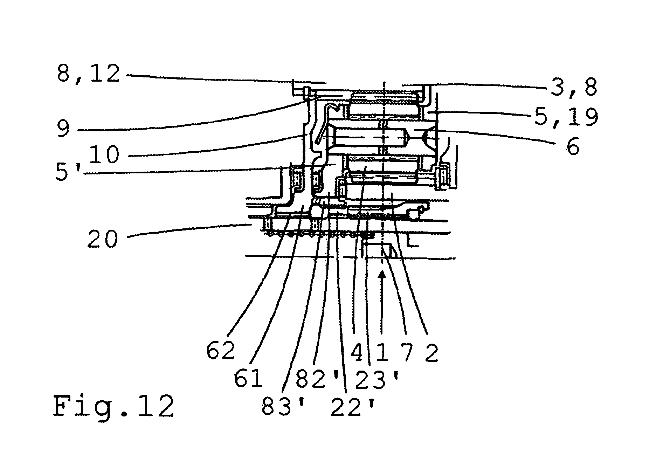

Die Schaltkupplung 21 umfasst eine trägerseitige Kupplungsnabe 22, 22' und eine wellenseitige Kupplungshülse 23, 23', die in der Ausführung nach Fig. 12 mit einer inneren bzw. äußeren Stirnverzahnung, in allen anderen Ausführungen jeweils mit einer Kronverzahnung versehen sind. Die Kupplungshülsen 23, 23' stehen jeweils über mehrere in Langlöchern 24 der Eingangswelle 20 geführten Mitnehmern 25 mit einem in einer Zentralbohrung 26 der eingangswelle 20 geführten Schaltkolben 27 in Verbindung, der hydraulisch gegen die Rückstellkraft einer in der Zentralbohrung 26 angeordneten Rückstellfeder 28 in Einrückrichtung axial verschiebbar ist.

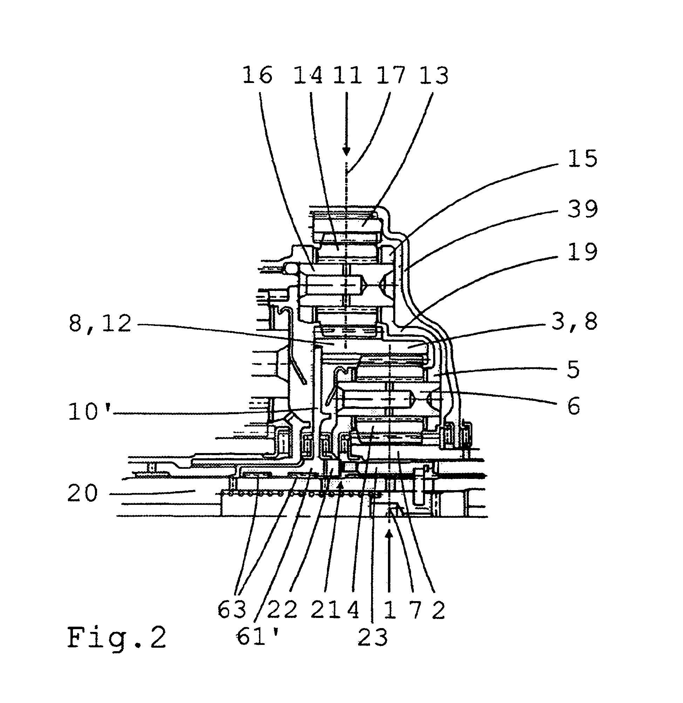

In der Ausführungsform nach Fig. 2 ist das gemeinsame Zahnradbauteil 8 im Unterschied zu den übrigen Ausführungen mit dem Träger 10' verschweißt und somit starr verbunden.

Der radial innere Steg 5 und der radial äußere Steg 15 sind in der Ausführungsform nach Fig. 1 über eine Mitnahmeverzahnung 18 drehfest miteinander gekoppelt. In allen anderen Ausführungen sind die beiden Stege 5, 15 einstückig in einem gemeinsamen Steg 19 zusammengefasst und somit starr, d. h. drehfest sowie axial- und radialspielfrei, miteinander verbunden.

Wie Fig. 22 weiter zeigt, ist das innere Sonnenrad 2 über eine als Lamellenkupplung ausgebildete Schaltkupplung 29 mit der Eingangswelle 20 und über eine als Lamellenbremse ausgebildete Schaltbremse 30 gegenüber dem Getriebegehäuse 31 arretierbar. Hierzu ist das radial innere Sonnenrad 2 über eine Steck- oder Mitnahmeverzahnung 32 drehfest mit einem gemeinsamen Träger 33 des Außenlamellenträgers 34 der Schaltkupplung 29 und des Innenlamellenträgers 35 der Schaltbremse 30 gekoppelt. Der Innenlamellenträger 36 der Schaltkupplung 29 ist über eine Mitnahmeverzahnung 37 drehfest mit der Eingangswelle 20 gekoppelt.

Das äußere Hohlrad 13 ist über eine Mitnahmeverzahnung 38 drehfest mit einem Hohlradträger 39 gekoppelt. In diese Mitnahmeverzahnung 38 greift auch ein Innenlamellenträger 40 einer weiteren als Lamellenbremse ausgebildeten Schaltbremse 41 ein, über die das äußere Hohlrad 13 gegenüber dem Getriebegehäuse 31 arretierbar ist.

Der Hauptradsatz des Planeten-Automatgetriebes besteht aus zwei miteinander gekoppelten einfachen Planetenradsätzen 42, 52 mit jeweils einem Sonnenrad 43, 53, einem Hohlrad 44, 54 und einem mehrere Planetenräder 45, 55 tragenden Steg (Planetenträger) 46, 56, deren Planetenräder 45, 55 jeweils umfangsseitig verteilt über Planetenbolzen 47, 57 drehbar auf dem zugeordneten Steg 46, 56 gelagert sind.

Die beiden Planetenradsätze 42, 52 sind axial benachbart zueinander und axial benachbart zu den beiden Planetenradsätzen 1, 11 des Vorschaltradsatzes angeordnet. Die Koppelung der beiden Planetenradsätze 42, 52 besteht in einer drehfesten Verbindung der beiden Sonnenräder 43 und 53, die durch eine einstückige Bauweise der Sonnenräder 43, 53 realisiert ist, und in einer drehfesten Verbindung des Steges 46 des ersten Planetenradsatzes 42 mit dem Hohlrad 54 des zweiten Planetenradsatzes 52, die durch eine einstückige Verbindung des Steges 46 mit einem über eine Mitnahmeverzahnung 58 drehfest mit dem Hohlrad 54 verbundenen Hohlradträgers 59 gegeben ist.

Eine permanente Koppelung des Vorschaltradsatzes mit dem Hauptradsatz besteht darin, dass der radial äußere Steg 15 bzw. der gemeinsame Steg 19 des Vorschaltradsatzes drehfest mit dem Hohlrad 44 des ersten Planetenradsatzes 42 des Hauptradsatzes verbunden ist. Hierzu ist ein über eine Mitnahmeverzahnung 48 drehfest mit dem Hohlrad 44 gekoppelter Hohlradträger 49' mit dem axial benachbarten Teil des radial äußeren Steges 15' verschweißt.

In einer ersten Ausführungsform einer einfachen Zentrierlagerung nach Fig. 1, bei der zur Vermeidung von Zwangslauf jeweils nur ein Bauteil der beiden koaxial geschachtelt angeordneten Planetenradsätze 1, 11 weitgehend radialspielfrei auf einer zentral angeordneten Getriebewelle oder gegenüber einem anderen zentriert gelagerten Bauteil radial gelagert ist, sind das radial innere Hohlrad 3 und das radial äußere Sonnenrad 12 einstückig zu dem gemeinsamen Zahnradbauteil 8 zusammengefasst, welches über die weitgehend radialspielfrei ausgeführte Mitnahmeverzahnung 9 drehfest mit dem scheibenförmigen Träger 10 gekoppelt ist.

Der Träger 10 ist an einer radial innen liegenden Lagemabe 61 über ein vorliegend als eine Gleitlagerbuchse 62 ausgebildetes Lagerelement auf der zentral angeordneten Eingangswelle 20 radial gelagert. Durch die Zentrierlagerung des Trägers 10 ist vorteilhaft auch die Kupplungsnabe 22 der Schaltkupplung 21 zentriert. Zur Vermeidung von Zwangslauf zwischen den Planetenrädern 4, 14 und dem gemeinsamen Zahnradbauteil 8 ist die Mitnahmeverzahnung 18, über die der innere Steg 5 und der äußere Steg 15 drehfest miteinander gekoppelt sind, vorzugsweise mit Radialspiel ausgeführt.

Eine ähnliche zweite Ausführungsform einer einfachen Zentrierlagerung nach Fig. 2 unterscheidet sich von der ersten Ausführungsform gemäß Fig. 1 dadurch, dass das gemeinsame Zahnradbauteil 8 über eine Schweißverbindung starr mit dem Träger 10' verbunden ist, dass der Träger 10' zur Vermeidung von Taumelbewegungen an einer axial verlängerten Lagernabe 61' über ein zweireihiges Nadellager 63 auf der Eingangswelle 20 radial gelagert ist, und dass die beiden Stege 5, 15 einstückig und somit starr in einem gemeinsamen Steg 19 zusammengefasst sind. Diese Ausführung ist besonders kostengünstig auch bei engen Toleranzen realisierbar.

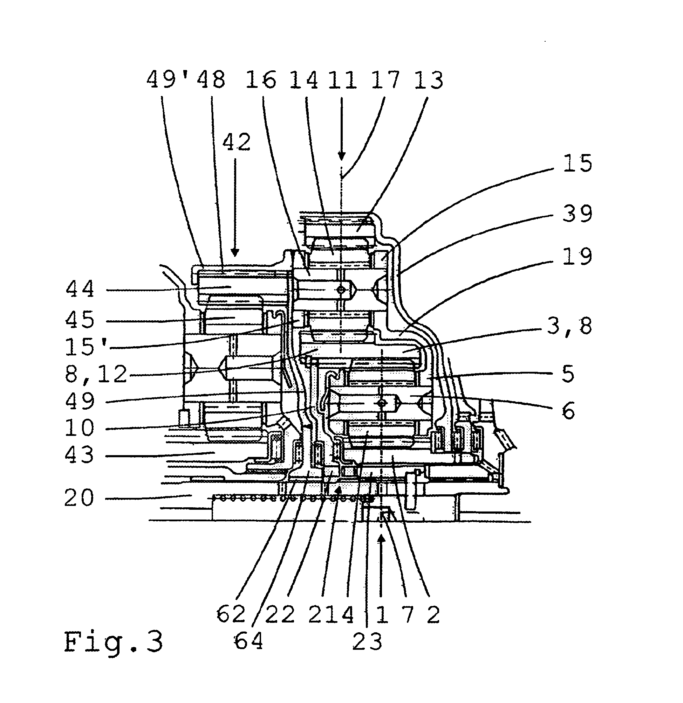

In einer dritten Ausführungsform einer einfachen Zentrierlagerung nach Fig. 3 ist der gemeinsame Steg 19, der das schwerste Bauteil der beiden Planetenradsätze 1, 11 bildet, über einen Träger 49 zentriert gelagert. Hierzu ist der mit dem axial benachbarten Teil des äußeren Steges 15' verschweißte Hohlradträger 49' des benachbarten Planetenradsatzes 42 über die Mitnahmeverzahnung 48 am Träger 49 zentriert, wobei der Träger 49 mit einer Lagernabe 64 verschweißt ist, die über ein als eine Gleitlagerbuchse 62 ausgebildetes Lagerelement auf der Eingangswelle 20 radial gelagert ist.

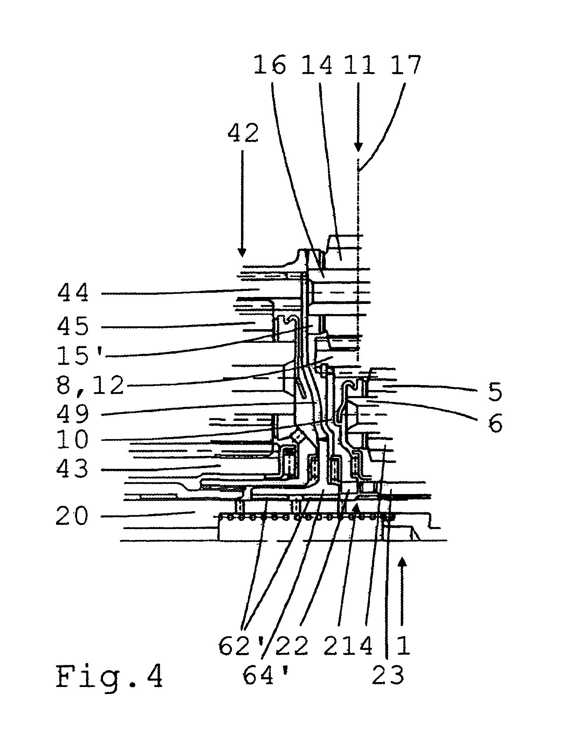

Zur Vermeidung von Taumelbewegungen ist das Lagerelement bei der Ausführungsform nach Fig. 4 im Unterschied zu der Ausführungsform nach Fig. 3 in Verbindung mit einer axial verlängerten Lagernabe 64' als eine zweireihige Gleitlagerbuchse 62' ausgebildet.

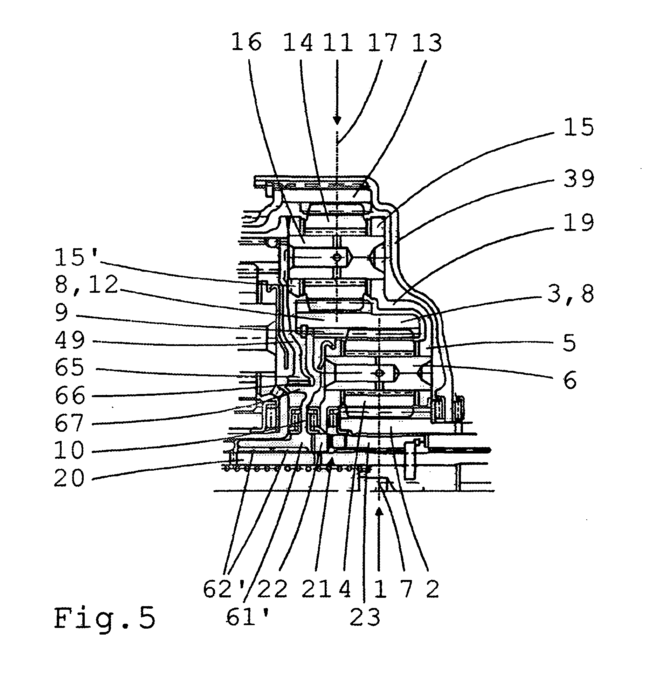

In der Ausführungsform nach Fig. 5 ist der axial benachbarte zum äußeren Steg 15' angeordnete Träger 49 an einer zugeordneten Lagernabe 65 über ein als Gleitlagerbuchse 66 ausgebildetes Lagerelement auf einem Lagerschaft 67 des Trägers 10 radial gelagert, der seinerseits mit einer axial verlängerten Lagernabe 61' über eine zweireihige Gleitlagerbuchse 62' auf der Eingangswelle 20 radial gelagert ist. Zur Vermeidung von Zwangslauf zwischen den Planetenrädern 4, 14 und dem gemeinsamen Zahnradbauteil 8 ist die Mitnahmeverzahnung 9 zwischen dem gemeinsamen Zahnradbauteil 8 und dem Träger 10 mit Radialspiel ausgeführt.

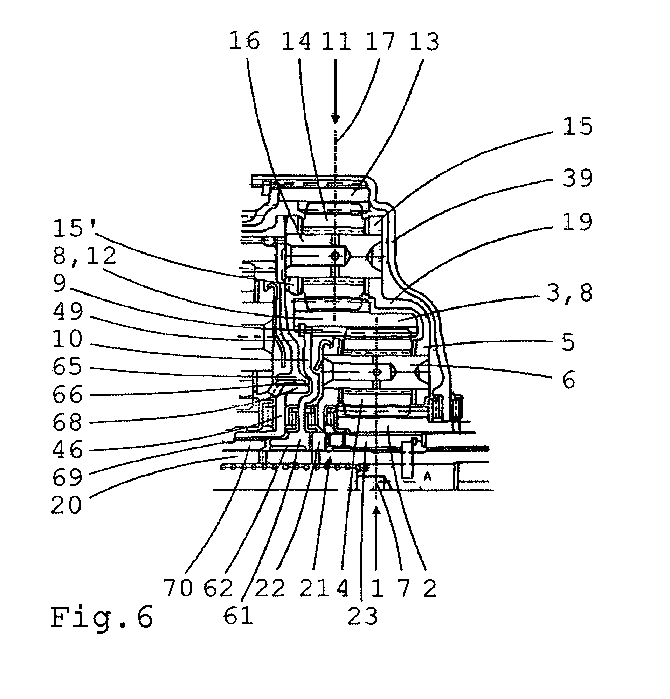

Eine ähnliche sechste Ausführungsform einer einfachen Zentrierlagerung nach Fig. 6 unterscheidet sich von der fünften Ausführungsform nach Fig. 5 dadurch, dass der Träger 49 an der zugeordneten Lagernabe 65 über ein als eine Gleitlagerbuchse 66 ausgebildetes Lagerelement nunmehr auf einem Lagerschaft 68 des Steges 46 des axial benachbarten Planetenradsatzes 42 radial gelagert, der seinerseits über eine Mitnahmeverzahnung 69 weitgehend radialspielfrei und drehfest mit einer auf der Eingangswelle 20 gelagerten Hohlwelle 70 verbunden ist.

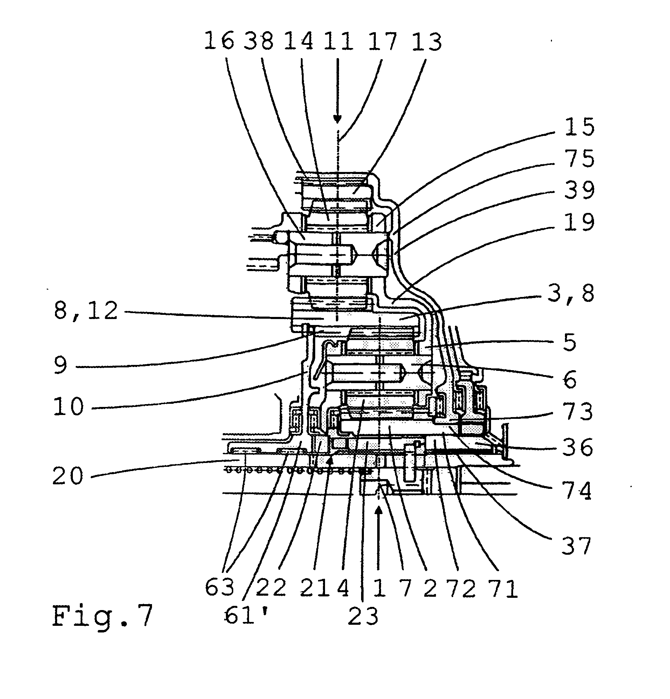

In einer siebten Ausführungsform einer einfachen Zentrierlagerung nach Fig. 7 sind die am schnellsten rotierenden Bauteile, nämlich das innere Sonnenrad 2 und das äußere Hohlrad 13 zentriert gelagert. Hierzu ist das aus Stahl bestehende innere Sonnenrad 2 an einer zugeordneten Lagernabe 71 unmittelbar auf einem Lagerschaft 72 des aus Aluminium bestehenden Innenlamellenträgers 36 der Schaltkupplung 29 radial getagert, der seinerseits über die Mitnahmeverzahnung 37 weitgehend radialspielfrei mit der Eingangswelle 20 verbunden ist. Das äußere Hohlrad 13 ist über die zugeordnete Mitnahmeverzahnung 38 weitgehend radialspielfrei mit dem Hohlradträger 39 verbunden, der aus Aluminium besteht und an einer radial innen liegenden Lagernabe 73 unmittelbar auf einem Lagerschaft 74 des stählernen inneren Sonnenrades 2 radial gelagert ist.

Bei der Ausführungsvariante gemäß Fig. 7 ist der Hohlradträger 39 ist zur Vermeidung von Taumelbewegungen axial innen mit einem Anlaufsteg 75 zur Abstützung gegenüber den axial hervorstehenden Planetenbolzen 16 des äußeren Steges 15 versehen. Das gemeinsame Zahnradbauteil 8 ist in diesem Fall entsprechend der Ausführungsform nach Fig. 1 über die Mitnahmeverzahnung 9 drehfest und mittels eines Sicherungsringes axial gesichert mit dem Träger 10 verbunden, der seinerseits wie in der Ausführungsvariante gemäß Fig. 2 über ein zweireihiges Nadellager 63 auf der Eingangswelle 20 radial gelagert ist, wobei die Mitnahmeverzahnung 9 zur Vermeidung von Zwangslauf mit Radialspiel ausgeführt ist.

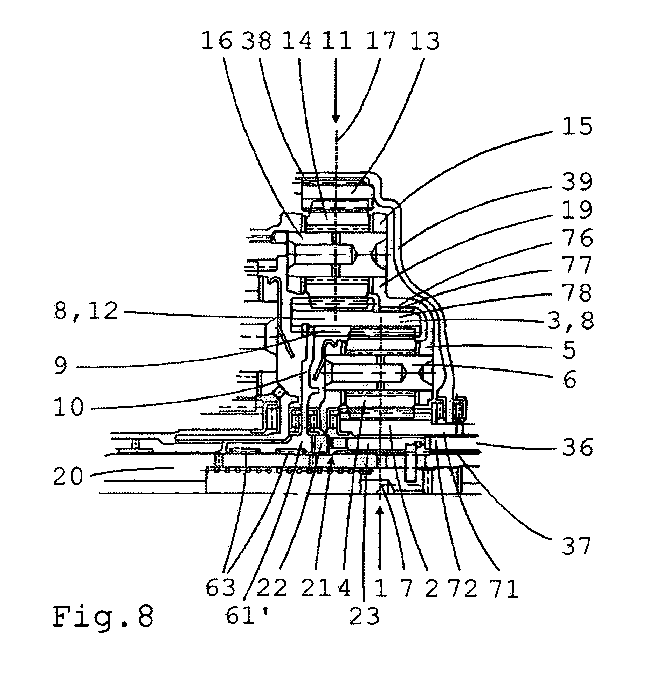

In einer ersten Ausführungsform einer mehrfachen Zentrierlagerung nach Fig. 8, bei der mindestens zwei Bauteile von einem der beiden koaxial geschachtelt angeordneten Planetenradsätze 1, 11 auf einer zentral angeordneten Getriebewelle oder gegenüber einem anderen zentriert gelagerten Bauteil radial gelagert sind, ist das als Hohlrad und Sonnenrad dienende gemeinsame Zahnradbauteil 8 entsprechend der Ausführungsvariante nach Fig. 7 über eine Mitnahmeverzahnung 9 drehfest mit dem Träger 10 verbunden, der seinerseits über ein zweireihiges Nadellager 63 auf der Eingangswelle 20 radial gelagert ist. Bei dieser Ausführungsform bildet die Zentrierlagerung des gemeinsamen Zahnradbauteils 8 die Basislagerung. Demzufolge istdie Mitnahmeverzahnung 9 in diesem Fall weitgehend radialspielfrei ausgeführt. Zusätzlich ist bei dieser Ausführungsform der gemeinsame Steg 19 mit einer zugeordneten Lagernabe 76 über eine Gleitlagerbuchse 77 auf einem Lagerschaft 78 des gemeinsamen Zahnradbauteils 8 radial gelagert. Diese Zentrierlagerung des gemeinsamen Steges 19 ist besonders einfach und Platz sparend realisierbar, da sich durch den axialen Versatz der beiden Radialebenen 7, 17 ein überdeckungsfreier Bereich des inneren Hohlrades 3 ergibt, in dem der Lagerschaft 78 des gemeinsamen Zahnradbauteils 8 zweckmäßig angeordnet ist.

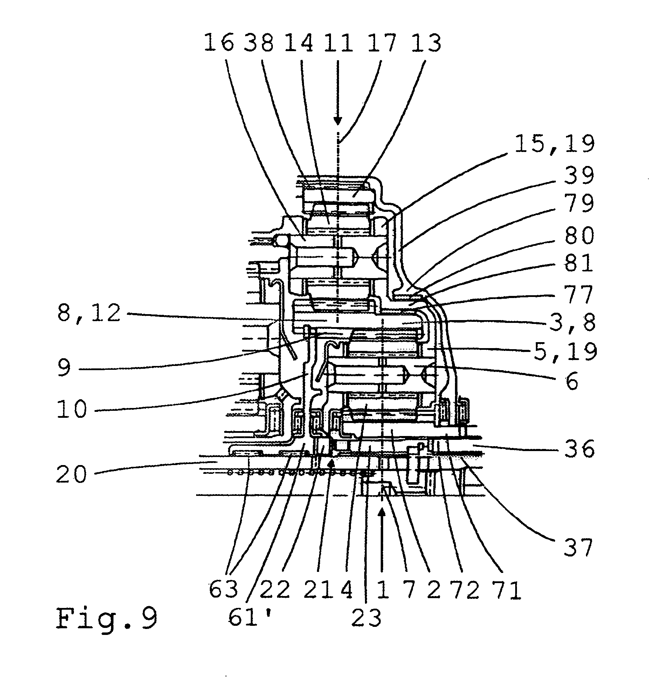

In einer Weiterbildung dieser Lageranordnung ist gemäß Fig. 9 zusätzlich der Hohlradträger 39 radial benachbart zu der Radiallagerung des gemeinsamen Steges 19 an einer zugeordneten Lagernabe 79 über eine Gleitlagerbuchse 80 auf einem Lagerschaft 81 des gemeinsamen Steges 19 radial gelagert.

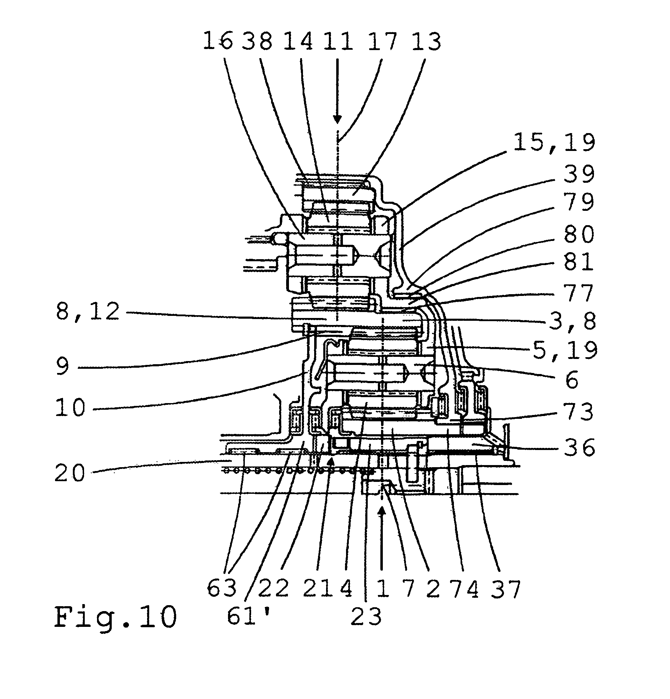

In einer vorteilhaften Weiterbildung dieser Lageranordnung nach Fig. 10 ist der Hohlradträger 39 aus Aluminium hergestellt und radial innen mit einer Lagernabe 73 versehen, in der das aus Stahl bestehende innere Sonnenrad 2 mit einem Lagerschaft 74 unmittelbar radial gelagert ist.

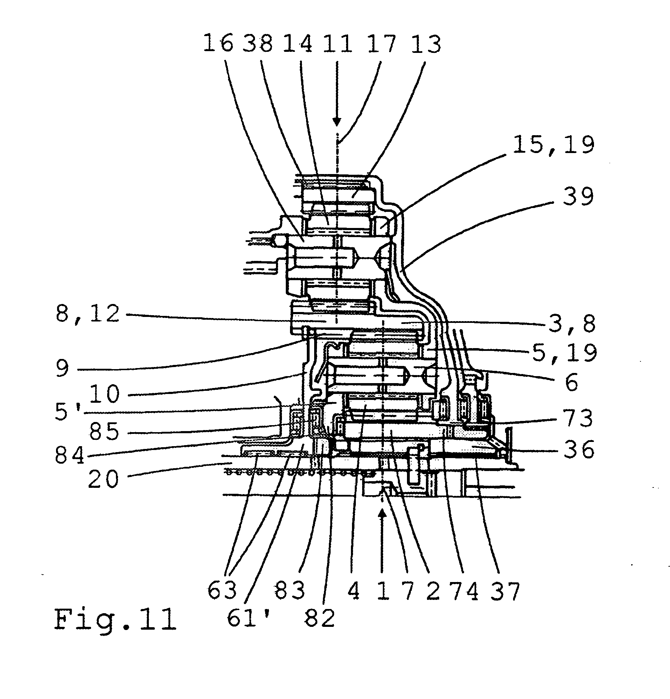

In einer dazu alternativen Radiallagerung des gemeinsamen Steges 19 gegenüber dem gemeinsamen Zahnradbauteil 8 bzw. dessen Träger 10 ist nach Fig. 11 vorgesehen, dass der zu dem Träger 10 des gemeinsamen Zahnradbauteils 8 axial benachbarte Teil des inneren Steges 5' aus Aluminium besteht, wobei dieser Steg 5 mit einer radial innen angeordneten Lagernabe 82 auf einer an einem Lagerschaft 83 des zentriert gelagerten Trägers 10 abgestützten Winkelscheibe 84 aus Stahl eines zwischen dem inneren Steg 5' und dem Träger 10 angeordneten Axiallagers 85 radial gelagert ist. Der Bereich der Winkelscheibe 84, welcher zur Radiallagerung des Stegs 5' dient, ist dazu axial verlängert ausgebildet.

Eine ähnliche Radiallagerung des gemeinsamen Steges 19, die in Fig. 12 dargestellt ist, besteht darin, dass zumindest der zu dem Träger 10 des gemeinsamen Zahnradbauteils 8 axial benachbarte Teil des inneren Steges 5' aus Aluminium besteht und mit einer radial innen angeordneten Lagernabe 82' unmittelbar auf einem Lagerschaft 83' des aus Stahl bestehenden Trägers 10 radial gelagert ist. Bei dieser Ausführung sind die trägerseitige Kupplungsnabe 22' und die wellenseitige Kupplungshülse 23' der Schaltkupplung 21 aus Platzgründen mit einer inneren bzw. äußeren Stirnverzahnung versehen. Bei dieser Variante kann gegenüber der Ausführungsform der Fig. 11 auf eine Sonderausführung der Winkelscheibe 84 verzichtet werden.

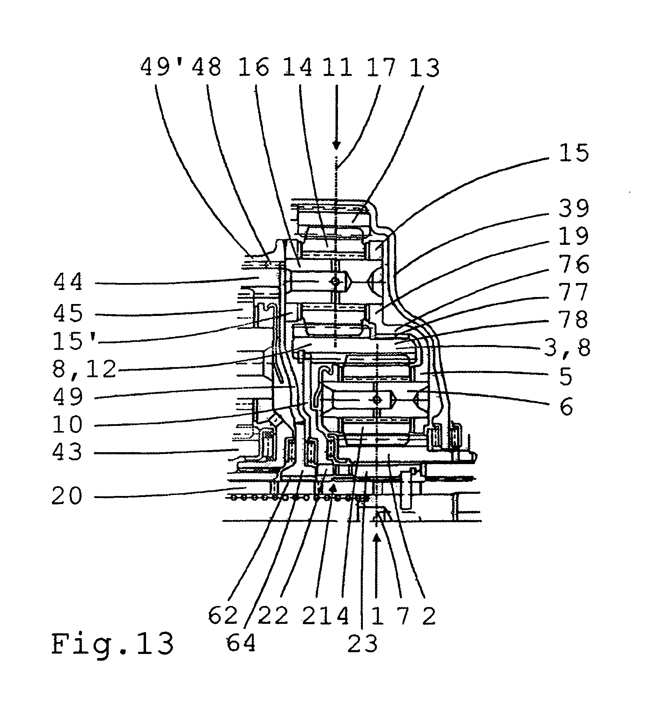

In einer weiteren mehrfachen Zentrierlagerung nach Fig. 13, die auf der Radiallagerung des gemeinsamen Steges 19 basiert, ist dieser Steg 19 entsprechend der Ausführungsvariante nach Fig. 3 auf der Eingangswelle 20 radial gelagert, indem der mit dem axial benachbarten Teil des äußeren Steges 15' verschweißte Hohlradträger 49' des Planetenradsatzes 42 über die Mitnahmeverzahnung 48 am Träger 49 zentriert, wobei der Träger 49 mit einer Lagernabe 64 verschweißt ist, die über ein als eine Gleitlagerbuchse 62 ausgebildetes Lagerelement auf der Eingangswelle 20 radial gelagert ist. Gegenüberdem gemeinsamen Steg 19 ist nun zusätzlich das gemeinsame Zahnradbauteil 8 im überdeckungsfreien Bereich des inneren Hohlrades 3 über eine zwischen einem Lagerschaft 78 des gemeinsamen Zahnradbauteils 8 und einer Lagernabe 76 des gemeinsamen Steges 19 angeordnete Gleitlagerbuchse 77 radial gelagert.

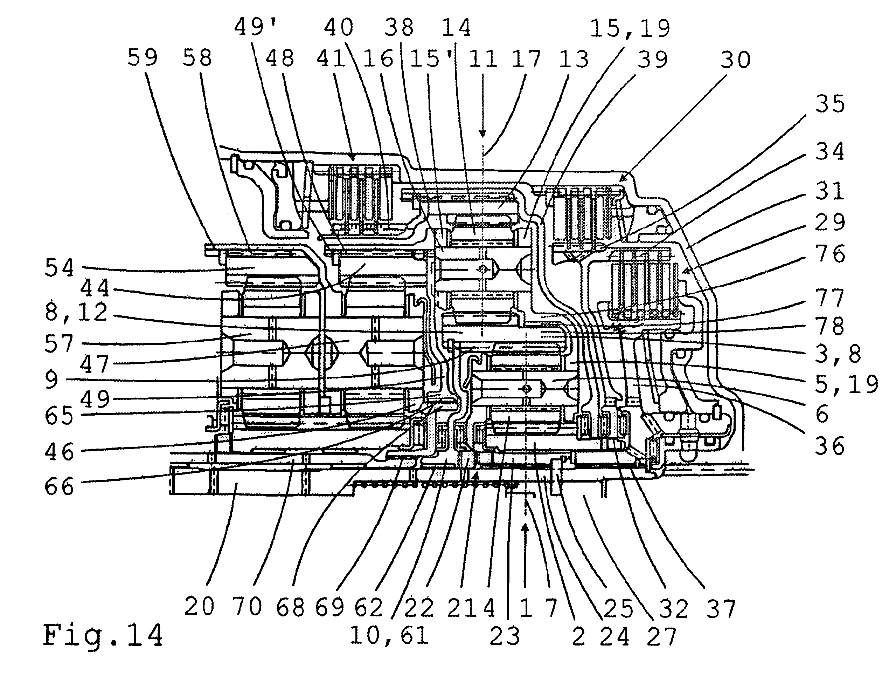

In einer ähnlichen Lageranordnung mit einer mehrfachen Zentrierlagerung gemäß Fig. 14 ist der Träger 49 entsprechend der Ausführungsform nach Fig. 6 an der zugeordneten Lagernabe 65 über eine Gleitlagerbuchse 66 auf einem Lagerschaft 68 des Steges 46 des axial benachbarten Planetenradsatzes 42 radial gelagert. Da bei dieser Ausführung auch der Träger 10 des gemeinsamen Zahnradbauteils 8 an der radial innen liegenden Lagernabe 61 über die Gleitlagerbuchse 62 auf der zentral angeordneten Eingangswelle 20 radial gelagert ist, ist die Mitnahmeverzahnung 9 zwischen dem Zahnradbauteil 8 und dem Träger 10 zur Vermeidung einer statisch überbestimmten Radiallagerung des Zahnradbauteils 8 mit Radialspiel ausgeführt.

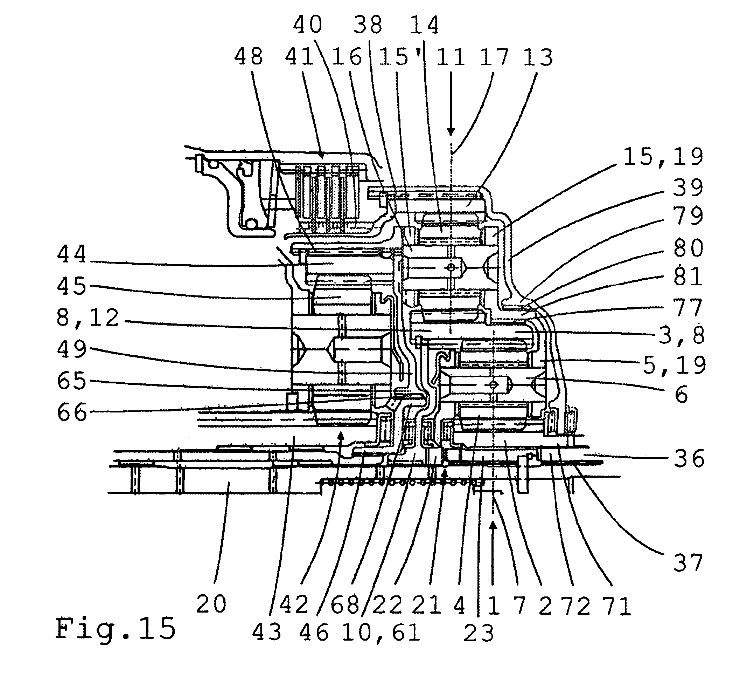

In einer Weiterbildung dieser Lageranordnung gemäß Fig. 15 ist zusätzlich der Hohlradträger 39 des äußeren Hohlrades 13 radial benachbart zu der Radiallagerung des gemeinsamen Zahnradbauteils 8 mit einer zugeordneten Lagernabe 79 über eine Gleitlagerbuchse 80 auf einem Lagerschaft 81 des gemeinsamen Steges 19 radial gelagert.

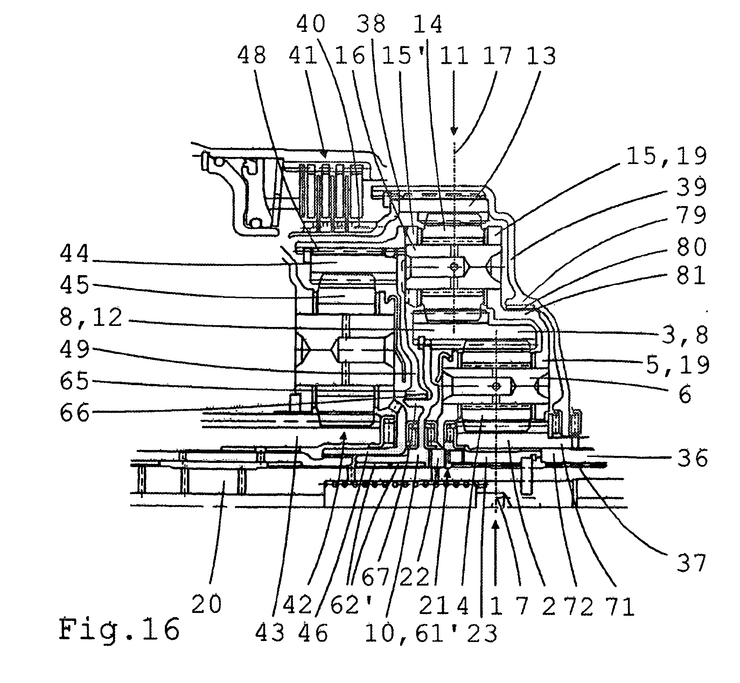

In einer anderen Ausführung einer Mehrfachlagerung nach Fig. 16, die auf einer Zentrierlagerung des gemeinsamen Steges 19 basiert, ist der axial benachbart zum äußeren Steg 15' Träger 49 entsprechend der Ausführung nach Fig. 5 an einer zugeordneten Lagernabe 65 über ein als Gleitlagerbuchse 66 ausgebilde-tes Lagerelement auf einem Lagerschaft 67 des Trägers 10 radial gelagert. Der über die Mitnahmeverzahnung 9 das gemeinsame Zahnradbauteil 8 tragende Träger 10 ist an einer axial verlängerten Lagernabe 61' über eine zweireihige Gleitlagerbuchse 62' auf der Eingangswelle 20 radial gelagert (siehe auch Fig. 5). Ohne eine weitere Radiallagerung des gemeinsamen Zahnradbauteils 8 ist der Hohlradträger 39 des äußeren Hohlrades 13 nahe des überdeckungsfreien Bereiches des inneren Hohlrades 3 entsprechend der Ausführung nach Fig. 15 an einer zugeordneten Lagernabe 79 über eine Gleitlagerbuchse 80 auf einem Lagerschaft 81 des gemeinsamen Steges 19 radial gelagert.

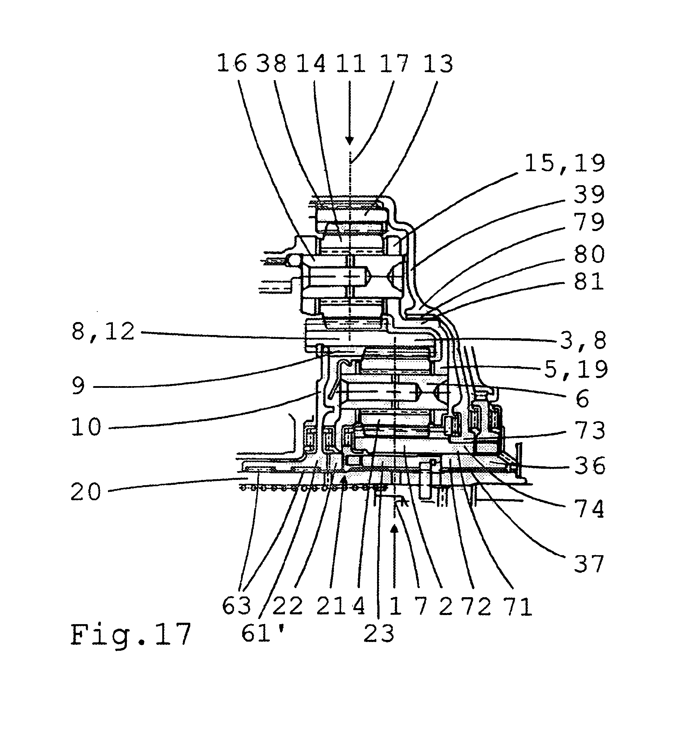

In einer weiteren mehrfachen Zentrierlagerung nach Fig. 17, die auf der Radiallagerung des inneren Sonnenrades 2 und des äußeren Hohlrades 13 basiert, ist das aus Stahl bestehende innere Sonnenrad 2 entsprechend der Ausführung nach Fig. 7 an einer zugeordneten Lagernabe 71 unmittelbar auf einem Lagerschaft 72 des aus Aluminium bestehenden Innenlamellenträgers 36 der Schaltkupplung 29 gelagert. Zudem ist das äußere Hohlrad 13 über die zugeordnete Mitnahmeverzahnung 38 weitgehend radialspielfrei mit dem Hohlradträger 39 verbunden, der aus Aluminium besteht und an einer radial innen liegenden Lagernabe 73 unmittelbar auf einem Lagerschaft 74 des inneren Sonnenrades 2 radial gelagert ist. Zusätzlich ist der gemeinsame Steg 19 nahe des überdeckungsfreien Bereiches des inneren Hohlrades 3 an einem zugeordneten Lagerschaft 81 über eine Gleitlagerbuchse 80 in einer Lagernabe 79 des Hohlradträgers 39 radial gelagert. Da bei dieser Ausführungsvariante auch der Träger 10 des gemeinsamen Zahnradbauteils 8 an der radial innen liegenden Lagernabe 61' über das Nadellager 63 auf der Eingangswelle 20 radial gelagert ist, ist die Mitnahmeverzahnung 9 zwischen dem Zahnradbauteil 8 und dem Träger 10 zur Vermeidung von Zwangslauf zwischen dem gemeinsamen Zahnradbauteil 8 und den Planetenrädern 4, 14 des gemeinsamen Steges 19 mit Radialspiel ausgeführt.

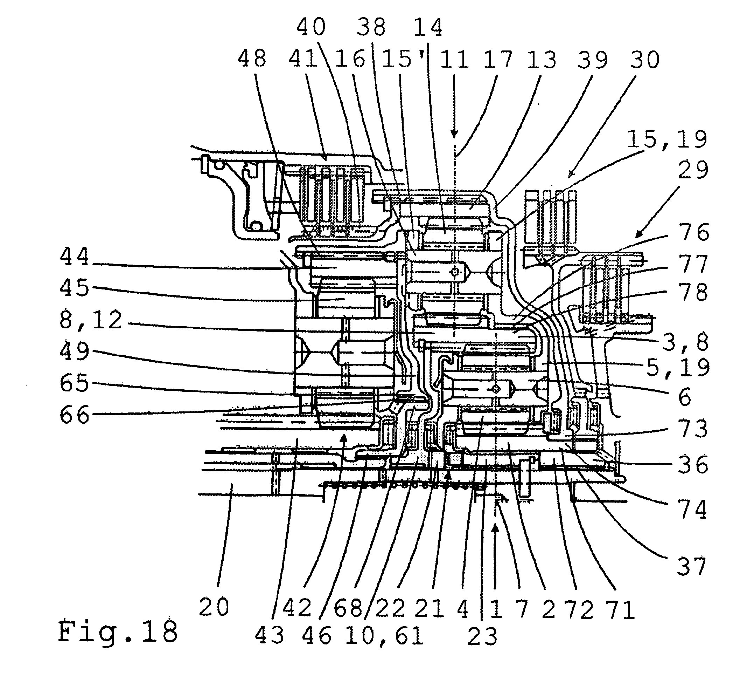

In einer anderen Ausführungsform einer mehrfachen Zentrierlagerung nach Fig. 18, die auf der Radiallagerung des inneren Sonnenrades 2 und des äußeren Hohlrades 13 basiert, sind das innere Sonnenrad 2 und der Hohlradträger 39 des äußeren Hohlrades identisch zu der vorbeschriebenen Ausführung nach Fig. 17 zentriert. Zusätzlich ist der gemeinsame Steg 19 zentriert gelagert, über den zum äußeren Steg 15' axial benachbart angeordnete Träger 49, welcher entsprechend der Ausführung nach Fig. 6 an der zugeordneten Lagernabe 65 über ein als eine Gleitlagerbuchse 66 ausgebildetes Lagerelement auf einem Lagerschaft 68 des Steges 46 des axial benachbarten Planetenradsatzes 42 radial gelagert ist. Des weiteren ist das gemeinsame Zahnradbauteil 8 einerseits über den zentral gelagerten Träger 10 und andererseits im überdeckungsfreien Bereich des inneren Hohlrades 3 über eine zwischen einem Lagerschaft 78 des gemeinsamen Zahnradbauteils 8 und einer Lagernabe 76 des gemeinsamen Steges 19 angeordnete Gleitlagerbuchse 77 radial gelagert. Bei dieser Ausführung sind die Mitnahmeverzahnung 9 zwischen dem Zahnradbauteil 8 und dem Träger 10 zur Vermeidung einer statisch überbestimmten Radiallagerung des Zahnradbauteils 8 sowie die Mitnahmeverzahnung 38 zwischen dem äußeren Hohlrad 13 und dem Hohlradträger 39 zur Vermeidung von Zwangslauf zwischen dem äußeren Hohlrad 13 und den Planetenrädern 14 des äußeren Steges 15 zweckmäßig mit Radialspiel ausgeführt.

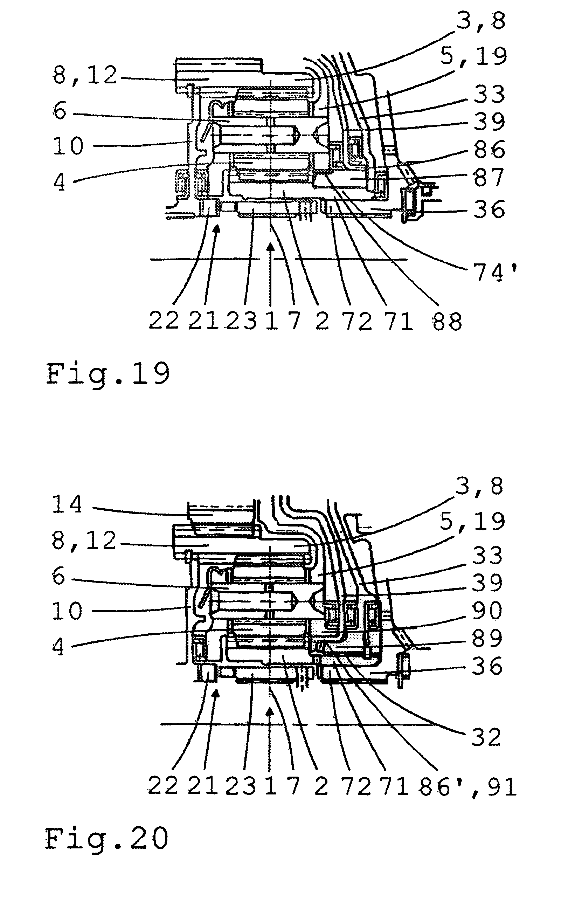

In einer weiteren Ausführungsform einer derartigen mehrfachen Zentrierlagerung nach Fig. 19 ist der Hohlradträger 39 aus Stahl hergestellt und an einer radial innen angeordneten Lagernabe 86 unmittelbar auf einer Lagerhülse 87 aus Aluminium radial gelagert, die wiederum unmittelbar auf einem Lagerschaft 74' des zentriert gelagerten inneren Sonnenrades 2 aus Stahl radial gelagert ist. Zur Vermeidung von Drehzahldifferenzen an der Lagerhülse 87 ist diese über eine Steckverzahnung 88 drehfest mit dem gemeinsamen Steg 19 gekoppelt. Vorliegend ist der gemeinsame Träger 33 des Außenlamellenträgers 34 der Schaltkupplung 29 und des Innenlamellenträgers 35 der Schaltbremse 30 (siehe Fig. 14) aus Stahl hergestellt und mit dem inneren Sonnenrad 2 verschweißt.

Eine ähnliche Ausführungsform einer derartigen mehrfachen Zentrierlagerung nach Fig. 20 unterscheidet sich von der vorbeschriebenen Ausführungsvariante nach Fig. 19 dadurch, dass der gemeinsamen Träger 33 des Außenlamellenträgers 34 der Schaltkupplung 29 und des Innenlamellenträgers 35 der Schaltbremse 30 nunmehr aus Aluminium hergestellt und über eine Mitnahmeverzahnung 32 drehfest und weitgehend radialspielfrei mit dem inneren Sonnenrad 2 gekoppelt ist. Der Hohlradträger 39 des äußeren Hohlrades 13 ist bei dieser Ausführung aus Stahl hergestellt und an einer radial innen angeordneten Lagernabe 86' unmittelbar auf einem Lagerschaft 89 des gemeinsamen Trägers 33 radial gelagert. Benachbart zu dieser Radiallagerung ist der in diesem Fall aus Aluminium bestehende gemeinsame Steg 19 mit einer radial innen angeordneten Lagernabe 90 unmittelbar auf einem Lagerschaft 91 des Hohlradträgers 39 radial gelagert.

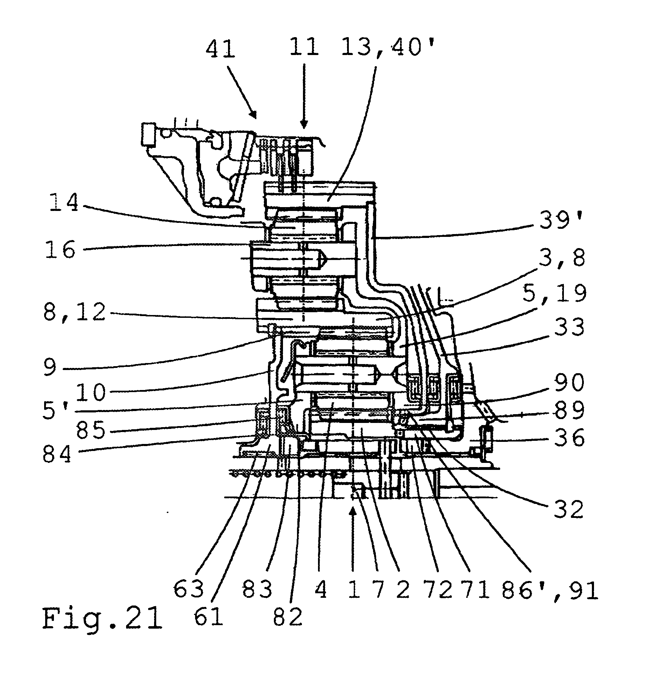

In einer weiteren Lageranordnung nach Fig. 21 ist der gemeinsame Steg 19 zur Vermeidung von Taumelbewegungen axial beidseitig radial gelagert, indem die Lagerung des gemeinsamen Steges 19 gemäß Fig. 20 mit der Lagerung des trägerseitigen Teils des inneren Steges 5' gemäß Fig. 11 kombiniert ist. Bei dieser Ausführung ist das äußere Hohlrad 13 mit dem Hohlradträger 39' verschweißt und einstückig mit dem Innenlamellenträger 40' der Schaltbremse 41 verbunden.

Bei allen vorbeschriebenen Mehrfachlagerungen von Bauteilen können die jeweiligen Radiallager bis auf die Basislagerungen generell mit Radialspiel ausgeführt sein, wenn die Vermeidung von Zwangslauf im Vordergrund steht, oder alle weitgehend radialspielfrei ausgeführt sein, wenn die Vermeidung von Unwuchten im Vordergrund steht.

**Bezugszeichen**

| | |
|---|---|
| 1 | Radial innerer Planetenradsatz |
| 2 | Inneres Sonnenrad |
| 3 | Inneres Hohlrad |
| 4 | Planetenrad |
| 5 | Innerer Steg, Planetenträger |
| 5' | Innerer Steg, Planetenträger |
| 6 | Planetenbolzen |
| 7 | Radialebene |
| 8 | Gemeinsames Zahnradbauteil (kombiniertes Hohlrad/Sonnenrad) |
| 9 | Mitnahmeverzahnung |
| 10 | Träger |
| 10' | Träger |
| 11 | Radial äußerer Planetenradsatz |
| 12 | Äußeres Sonnenrad |
| 13 | Äußeres Hohlrad |
| 14 | Planetenrad |
| 15 | Äußerer Steg, Planetenträger |
| 15' | Äußerer Steg, Planetenträger |
| 16 | Planetenbolzen |
| 17 | Radialebene |
| 18 | Mitnahmeverzahnung |
| 19 | Gemeinsamer Steg |
| 20 | Eingangswelle |
| 21 | Schaltkupplung |
| 22 | Kupplungsnabe |
| 22' | Kupplungsnabe |
| 23 | Kuppplungshülse |
| 23' | Kupplungshülse |
| 24 | Langloch |
| 25 | Mitnehmer |
| 26 | Zentralbohrung |
| 27 | Schaltkolben |
| 28 | Rückstellfeder |
| 29 | Schaltkupplung |
| 30 | Schaltbremse |
| 31 | Getriebegehäuse |
| 32 | Steckverzahnung, Mitnahmeverzahnung |
| 33 | Gemeinsamer Träger |
| 34 | Außenlamellenträger |
| 35 | Innenlamellenträger |
| 36 | Innenlamellenträger |
| 37 | Mitnahmeverzahnung |
| 38 | Mitnahmeverzahnung |
| 39 | Hohlradträger |
| 39' | Hohlradträger |
| 40 | Innenlamellenträger |
| 40' | Innenlamellenträger |
| 41 | Schaltbremse |
| 42 | Erster Planetenradsatz |
| 43 | Sonnenrad |
| 44 | Hohlrad |
| 45 | Planetenrad |
| 46 | Steg, Planetenträger |
| 47 | Planetenbolzen |
| 48 | Mitnahmeverzahnung |
| 49 | Träger |
| 49' | Hohlradträger |
| 52 | Zweiter Planetenradsatz |
| 53 | Sonnenrad |
| 54 | Hohlrad |
| 55 | Planetenrad |
| 56 | Steg, Planetenträger |
| 57 | Planetenbolzen |
| 58 | Mitnahmeverzahnung |
| 59 | Hohlradträger |
| 61 | Lagernabe von 10 |
| 61' | Lagernabe von 10, 10' |
| 62 | Gleitlagerbuchse |
| 62' | Gleitlagerbuchse |
| 63 | Nadellager |
| 64 | Lagernabe von 49 |
| 64' | Lagernabe von 49 |
| 65 | Lagernabe von 49 |
| 66 | Gleitlagerbuchse |
| 67 | Lagerschaft von 10 |
| 68 | Lagerschaft von 46 |
| 69 | Mitnahmeverzahnung |
| 70 | Hohlwelle |
| 71 | Lagernabe von 2 |
| 72 | Lagerschaft von 36 |
| 73 | Lagernabe von 39 |
| 74 | Lagerschaft von 2 |
| 74' | Lagerschaft von 2 |
| 75 | Anlaufsteg |
| 76 | Lagernabe von 19 |
| 77 | Gleitlagerbuchse |
| 78 | Lagerschaft von 8 |
| 79 | Lagernabe von 39 |
| 80 | Gleitlagerbuchse |
| 81 | Lagerschaft von 19 |
| 82 | Lagernabe von 5' |
| 82' | Lagernabe von 5' |
| 83 | Lagerschaft von 10 |
| 83' | Lagerschaft von 10 |
| 84 | Winkelscheibe |
| 85 | Axiallager |
| 86 | Lagernabe von 39 |
| 86' | Lagernabe von 39 |
| 87 | Lagerhülse |
| 88 | Steckverzahnung |
| 89 | Lagerschaft von 33 |
| 90 | Lagernabe von 19 |
| 91 | Lagerschaft von 33 |

## Patentansprüche

1. Radsatzanordnung eines Planetengetriebes, beispielsweise eines Kraftfahrzeug-Automatgetriebes, mit mindestens zwei einfachen Planetenradsätzen (1, 11), die jeweils ein Sonnenrad (2, 12), ein Hohlrad (3, 13), und einen mehrere Planetenräder (4, 14) tragenden Steg (5, 15) umfassen, und die mit einer koaxialen Schachtelanordnung eines der Planetenradsätze (1) radial innerhalb des Sonnenrades (12) des anderen Planetenradsatzes (11) in einer gemeinsamen Radialebene oder in axial geringfügig zueinander versetzten Radialebenen (7, 17) angeordnet sind, wobei zum einen das Hohlrad (3) des radial inneren Planetenradsatzes (1) sowie das Sonnenrad (12) des radial äußeren Planetenradsatzes (11) und zum anderen die Stege (5, 15) beider Planetenradsätze (1, 11) jeweils drehfest miteinander gekoppelt sind, **dadurch gekennzeichnet, dass** jeweils nur ein Bauteil, nämlich das Sonnenrad (2, 12), das Hohlrad (3, 13) oder der Steg (5, 15), jedes der beiden Planetenradsätze (1, 11) weitgehend radialspielfrei auf einer zentral angeordneten Getriebewelle (20) oder gegenüber einem zentriert gelagerten Bauteil radial gelagert ist.

2. Radsatzanordnung nach Anspruch 1, **dadurch gekennzeichnet, dass** das innere Hohlrad (3) und das äußere Sonnenrad (12) in einem gemeinsamen Zahnradbauteil (8) starr miteinander verbunden sowie drehfest und weitgehend radialspielfrei mit einem Träger (10, 10') gekoppelt sind, der an einer zugeordneten Lagernabe (61, 61') auf der zentralen Getriebewelle (20) oder auf einem Lagerschaft eines zentral gelagerten Bauteils eines der beiden Planetenradsätre (1, 11) oder einer axial benachbarten Baugruppe radial gelagert ist.

3. Radsatzanordnung nach Anspruch 1 oder 2, **dadurch gekennzeichnet, dass** das innere Hohlrad 3 und das äußere Sonnenrad 12 durch eine einstückige Ausführung in einem gemeinsamen Zahnradbauteil 8 zusammengefasst sind.

4. Radsatzanordnung nach Anspruch 2 oder 3, **dadurch gekennzeichnet, dass** das gemeinsame Zahnradbauteil (8) über eine weitgehend radialspielfreie Mitnahmeverzahnung (9) mit dem Träger (10) gekoppelt ist.

5. Radsatzanordnung nach Anspruch 2, **dadurch gekennzeichnet, dass** das gemeinsame Zahnradbauteil (8) über eine Schweißverbindung mit dem Träger (10') gekoppelt ist.

6. Radsatzanordnung nach einem der Ansprüche 1 bis 5, **dadurch gekennzeichnet, dass** der innere Steg (5) und der äußere Steg (15) zu einem gemeinsamen Steg (19) starr miteinander verbunden sind, und dass der gemeinsame Steg (19) an einer zugeordneten Lagernabe (64, 64', 65) auf der zentralen Getriebewelle (20) oder auf einem Lagerschaft (67, 68) eines zentral gelagerten Bauteils (10, 46) eines der beiden Planetenradsätze (1, 11) oder einer axial benachbarten Baugruppe (42) radial gelagert ist.

7. Radsatzanordnung nach Anspruch 6, **dadurch gekennzeichnet, dass** der gemeinsame Steg (19) auf einem Lagerschaft (67) des mit dem inneren Hohlrad (3) und dem äußeren Sonnenrad (12) drehfest gekoppelten Trägers (10) radial gelagert ist.

8. Radsatzanordnung nach Anspruch 6, **dadurch gekennzeichnet, dass** der gemeinsame Steg (19) auf einem Lagerschaft (68) eines Steges (46) eines weiteren, axial benachbarten Planetenradsatzes (42) radial gelagert ist.

9. Radsatzanordnung nach einem der Ansprüche 1 bis 8, **dadurch gekennzeichnet, dass** das innere Sonnenrad (2) auf der zentral angeordneten Getriebewelle (20) oder auf einem Lagerschaft (72) einer axial benachbarten Baugruppe (29) radial gelagert ist, und dass das äußere Hohlrad (13) über eine Mitnahmeverzahnung (38)
drehfest mit einem Hohlradträger (39) gekoppelt ist, der mit einer radial innen angeordneten Lagernabe (73) auf der zentralen Getriebewelle (20) oder auf einem Lagerschaft (74) eines zentral gelagerten Bauteils (2) eines der beiden Planetenradsätze (1) oder einer axial benachbarten Baugruppe radial gelagert ist.

10. Radsatzanordnung nach Anspruch 9, **dadurch gekennzeichnet, dass** das innere Sonnenrad (2) aus Stahl besteht und unmittelbar auf einer Lagerhülse aus Aluminium oder einem Bauteil (36) einer axial benachbarten Baugruppe (29) aus Aluminium radial gelagert ist, wobei die Lagerhülse bzw. das Bauteil (36) drehfest und weitgehend radialspielfrei auf der zentralen Getriebewelle (2) angeordnet ist.

11. Radsatzanordnung nach Anspruch 9 und 10, **dadurch gekennzeichnet, dass** der Hohlradträger (39) aus Aluminium besteht und mit der zugeordneten Lagernabe (73) unmittelbar auf einem Lagerschaft (74) des inneren Sonnenrades (2) radial gelagert ist.

12. Radsatzanordnung nach einem der Ansprüche 2 bis 5, **dadurch gekennzeichnet, dass** der gemeinsame Steg (19) mit einer zugeordneten Lagernabe (76) auf einem Lagerschaft (78) des über den Träger (10, 10') zentriert gelagerten gemeinsamen Zahnradbauteils (8) radial gelagert ist.

13. Radsatzanordnung nach Anspruch 12, **dadurch gekennzeichnet, dass** der Hohlradträger (39) radial benachbart zu der Radiallagerung des gemeinsamen Steges (19) an einer zugeordneten Lagernabe (79) auf einem Lagerschaft (81) des gemeinsamen Steges (19) radial gelagert ist.

14. Radsatzanordnung nach Anspruch 12 oder 13, **dadurch gekennzeichnet, dass** der Hohlradträger (39) aus Aluminium besteht und radial innen mit einer Lagernabe (73) versehen ist, in der das aus Stahl bestehende innere Sonnenrad (2) mit einem Lagerschaft (74) unmittelbar radial gelagert ist.

15. Radsatzanordnung nach einem der Ansprüche 2 bis 5, **dadurch gekennzeichnet, dass** der gemeinsame Steg (5', 19) an einer zugeordneten Lagernabe (82, 82') auf einem Lagerschaft (83, 83') des zentriert gelagerten Trägers (10) radial gelagert ist.

16. Radsatzanordnung nach Anspruch 15, **dadurch gekennzeichnet, dass** der gemeinsame Steg (5', 19) aus Aluminium besteht und an einer radial innen angeordneten Lagernabe (82) unmittelbar auf einer an einem Lagerschaft (83) des zentriert gelagerten Trägers (10) abgestützten Winkelscheibe (84) aus Stahl eines zwischen dem Steg (5') und dem Träger (10) angeordneten Axiallagers (85) radial gelagert ist.

17. Radsatzanordnung nach Anspruch 15, **dadurch gekennzeichnet, dass** der gemeinsame Steg (5', 19) aus Aluminium besteht und an einer radial innen angeordneten Lagernabe (82') unmittelbar auf einem Lagerschaft (83') des aus Stahl bestehenden Trägers (10) radial gelagert ist.

18. Radsatzanordnung nach einem der Ansprüche 6 bis 8, **dadurch gekennzeichnet, dass** der Hohlradträger (39) an einer zugeordneten Lagernabe (79) auf einem Lagerschaft (81) des zentriert gelagerten gemeinsamen Steges (19) radial gelagert ist.

19. Radsatzanordnung nach einem der Ansprüche 12 bis 14, oder 18, **dadurch gekennzeichnet, dass** die Mitnahmeverzahnung (9) zwischen dem gemeinsamen Zahnradbauteil (8) und dem Träger (10) zur Vermeidung von Zwangslauf mit Radialspiel ausgeführt ist.

20. Radsatzanordnung nach einem der Ansprüche 13, 14 oder 18, **dadurch gekennzeichnet, dass** die Mitnahmeverzahnung (38) zwischen dem äußeren Hohlrad (13) und dem Hohlradträger (39) zur Vermeidung von Zwangslauf mit Radialspiel ausgeführt ist.
(Weiter auf Blatt 40 der ursprünglich eingereichten Unterlagen).

## Claims

1. Gear-set arrangement of a planetary gear mechanism, for example of a motor-vehicle automatic transmission, having at least two basic planetary-gear sets (1, 11) which in each case comprise a sun gear (2, 12), an internal gear (3, 13) and a web (5, 15) which carries a plurality of planetary gears (4, 14), and which planetary-gear sets (1, 11) are arranged with a coaxial nested arrangement of one of the planetary-gear sets (1) radially inside the sun gear (12) of the other planetary-gear set (11) in a common radial plane or in radial planes (7, 17) which are axially offset slightly with respect to one another, firstly the internal gear (3) of the radially inner planetary-gear set (1) and the sun gear (12) of the radially outer planetary-gear set (11) and secondly the webs (5, 15) of both planetary-gear sets (1, 11) being coupled in each case fixedly to one another so as to rotate together, **characterized in that** in each case only one component, namely the sun gear (2, 12), the internal gear (3, 13) or the web (5, 15), of each of the two planetary-gear sets (1, 11) is mounted largely without radial play on a centrally arranged transmission shaft (20) or radially with respect to a component which is mounted in a centred manner.

2. Gear-set arrangement according to Claim 1, **characterized in that** the inner internal gear (3) and the outer sun gear (12) are connected rigidly to one another in a common gearwheel component (8) and are coupled in a manner which is fixed rotationally and largely without radial play to a carrier (10, 10') which is mounted radially on an associated bearing hub (61, 61') on the central transmission shaft (20) or on a bearing shank of a centrally mounted component of one of the two planetary-gear sets (1, 11) or an axially adjacent assembly.

3. Gear-set arrangement according to Claim 1 or 2, **characterized in that** the inner internal gear (3) and the outer sun gear (12) are combined by a single-piece configuration in a common gearwheel component (8).

4. Gear-set arrangement according to Claim 2 or 3, **characterized in that** the common gearwheel component (8) is coupled to the carrier (10) via a driving toothing system (9) which is largely without radial play.

5. Gear-set arrangement according to Claim 2, **characterized in that** the common gearwheel component (8) is coupled to the carrier (10') via a welded connection.

6. Gear-set arrangement according to one of Claims 1 to 5, **characterized in that** the inner web (5) and the outer web (15) are connected rigidly to one another to form a common web (19), and **in that** the common web (19) is mounted radially on an associated bearing hub (64, 64', 65) on the central transmission shaft (20) or on a bearing stem (67, 68) of a centrally mounted component (10, 46) of one of the two planetary-gear sets (1, 11) or an axially adjacent assembly (42).

7. Gear-set arrangement according to Claim 6, **characterized in that** the common web (19) is mounted radially on a bearing stem (67) of the carrier (10) which is coupled fixedly to the inner internal gear (3) and the outer sun gear (12) so as to rotate with them.

8. Gear-set arrangement according to Claim 6, **characterized in that** the common web (19) is mounted radially on a bearing stem (68) of a web (46) of a further, axially adjacent planetary-gear set (42).

9. Gear-set arrangement according to one of Claims 1 to 8, **characterized in that** the inner sun gear (2) is mounted radially on the centrally arranged transmission shaft (20) or on a bearing stem (72) of an axially adjacent assembly (29), and **in that** the outer internal gear (13) is coupled fixedly to an internal-gear carrier (39) via a driving toothing system (38) so as to rotate with it, which internal-gear carrier (39) is mounted radially, by way of a bearing hub (73) which is arranged radially on the inside, on the central transmission shaft (20) or on a bearing stem (74) of a centrally mounted component (2) of one of the two planetary-gear sets (1) or an axially adjacent assembly.

10. Gear-set arrangement according to Claim 9, **characterized in that** the inner sun gear (2) is composed of steel and is radially mounted directly on a bearing sleeve made from aluminium or a component (36) of an axially adjacent assembly (29) made from aluminium, the bearing sleeve or the component (36) being arranged on the central transmission shaft (2) fixedly so as to rotate with it and largely without radial play.

11. Gear-set arrangement according to Claims 9 and 10, **characterized in that** the internal-gear carrier (39) is composed of aluminium and is radially mounted, by way of the associated bearing hub (73), directly on a bearing stem (74) of the inner sun gear (2).

12. Gear-set arrangement according to one of Claims 2 to 5, **characterized in that** the common web (19) is radially mounted, by way of an associated bearing hub (76), on a bearing stem (78) of the common gearwheel component (8) which is mounted in a centred manner via the carrier (10, 10').

13. Gear-set arrangement according to Claim 12, **characterized in that** the internal-gear carrier (39) is radially mounted, in a radially adjacent manner with respect to the radial mounting of the common web (19) on an associated bearing hub (79), on a bearing stem (81) of the common web (19).

14. Gear-set arrangement according to Claim 12 or 13, **characterized in that** the internal-gear carrier (39) is composed of aluminium and is provided radially on the inside with a bearing hub (73), in which the inner sun gear (2) which is composed of steel is radially mounted directly by way of a bearing stem (74).

15. Gear-set arrangement according to one of Claims 2 to 5, **characterized in that** the common web (5', 19) on an associated bearing hub (82, 82') is mounted radially on a bearing stem (83, 83') of the carrier (10) which is mounted in a centred manner.

16. Gear-set arrangement according to Claim 15, **characterized in that** the common web (5', 19) is composed of aluminium and, on a bearing hub (82) which is arranged radially on the inside, is radially mounted directly on an angled plate (84), made from steel and supported on a bearing stem (83) of the carrier (10) which is mounted in a centred manner, of an axial bearing (85) which is arranged between the web (5') and the carrier (10).

17. Gear-set arrangement according to Claim 15, **characterized in that** the common web (5', 19) is composed of aluminium and is radially mounted, on a bearing hub (82') which is arranged radially on the inside, directly on a bearing stem (83') of the carrier (10) which is composed of steel.

18. Gear-set arrangement according to one of Claims 6 to 8, **characterized in that** the internal-gear carrier (39) is radially mounted, on an associated bearing hub (79), on a bearing stem (81) of the common web (19) which is mounted in a centred manner.

19. Gear-set arrangement according to one of Claims 12 to 14, or 18, **characterized in that** the driving toothing system (9) between the common gearwheel component (8) and the carrier (10) is configured with radial play in order to avoid automatic running.

20. Gear-set arrangement according to one of Claims 13, 14 or 18, **characterized in that** the driving toothing system (38) between the outer internal gear (13) and the internal-gear carrier (39) is configured with radial play in order to avoid automatic running.

## Revendications

1. Ensemble de trains d'une boîte de vitesses à trains épicycloïdaux, par exemple d'une boîte de vitesses automatique d'un véhicule automobile, comprenant au moins deux trains épicycloïdaux simples (1, 11), qui comprennent chacun une roue solaire (2, 12), une couronne dentée (3, 13), et un porte-satellites (5, 15) portant plusieurs satellites (4, 14), et qui sont disposés avec un agencement emboîté coaxial de l'un des trains épicycloïdaux (1) radialement à l'intérieur de la roue solaire (12) de l'autre train épicycloïdal (11) dans un plan radial commun ou dans des plans radiaux (7, 17) décalés légèrement axialement l'un par rapport à l'autre, la couronne dentée (3) du train épicycloïdal radialement intérieur (1) ainsi que la roue solaire (12) du train épicycloïdal radialement extérieur (11) d'une part, et les porte-satellites (5, 15) des deux trains épicycloïdaux (1, 11) d'autre part étant accouplés à chaque fois de manière solidaire en rotation l'un à l'autre, **caractérisé en ce qu'**à chaque fois seulement un composant, à savoir la roue solaire (2, 12), la couronne dentée (3, 13) ou le porte-satellites (5, 15) de chacun des deux trains épicycloïdaux (1, 11) est monté essentiellement sans jeu radial sur un arbre de boîte de vitesses (20) disposé centralement ou radialement par rapport à un composant monté centralement.

2. Ensemble de trains selon la revendication 1, **caractérisé en ce que** la couronne dentée intérieure (3) et la roue solaire extérieure (12) sont connectées rigidement l'une à l'autre dans un composant à roue dentée commun (8) et sont accouplées de manière solidaire en rotation essentiellement sans jeu radial à un support (10, 10') qui est monté radialement sur un moyeu de palier associé (61, 61') sur l'arbre de boîte de vitesses central (20) ou sur un arbre de palier d'un composant monté centralement de l'un des deux trains épicycloïdaux (1, 11) ou d'un module axialement adjacent.

3. Ensemble de trains selon la revendication 1 ou 2, **caractérisé en ce que** la couronne dentée intérieure (3) et la roue solaire extérieure (12) sont réunies en un composant à roue dentée commun (8) par une réalisation d'une seule pièce.

4. Ensemble de trains selon la revendication 2 ou 3, **caractérisé en ce que** le composant à roue dentée commun (8) est accouplé au support (10) par le biais d'une denture d'entraînement (9) essentiellement sans jeu radial.

5. Ensemble de trains selon la revendication 2, **caractérisé en ce que** le composant à roue dentée commun (8) est accouplé au support (10') par le biais d'une connexion soudée.

6. Ensemble de trains selon l'une quelconque des revendications 1 à 5, **caractérisé en ce que** le porte-satellites intérieur (5) et le porte-satellites extérieur (15) sont connectés l'un à l'autre rigidement pour former un porte-satellites commun (19) et **en ce que** le porte-satellites commun (19) est monté radialement au niveau d'un moyeu de palier associé (64, 64', 65) sur l'arbre de boîte de vitesses central (20) ou sur un arbre de palier (67, 68) d'un composant monté centralement (10, 46) de l'un des deux trains épicycloïdaux (1, 11) ou d'un module axialement adjacent (42).

7. Ensemble de trains selon la revendication 6, **caractérisé en ce que** le porte-satellites commun (19) est monté radialement sur un arbre de palier (67) du support (10) accouplé de manière solidaire en rotation à la couronne dentée intérieure (3) et à la roue solaire extérieure (12).

8. Ensemble de trains selon la revendication 6, **caractérisé en ce que** le porte-satellites commun (19) est monté radialement sur un arbre de palier (68) d'un porte-satellites (46) d'un autre train épicycloïdal (42) axialement adjacent.

9. Ensemble de trains selon l'une quelconque des revendications 1 à 8, **caractérisé en ce que** la roue solaire intérieure (2) est montée radialement sur l'arbre de boîte de vitesses disposé centralement (20) ou sur un arbre de palier (72) d'un module axialement adjacent (29), et **en ce que** la couronne dentée extérieure (13) est accouplée de manière solidaire en rotation à un support de couronne dentée (39) par le biais d'une denture d'entraînement (38), lequel support de couronne dentée est monté radialement avec un moyeu de palier (73) disposé radialement à l'intérieur sur l'arbre de boîte de vitesses central (20) ou sur un arbre de palier (74) d'un composant monté centralement (2) de l'un des deux trains épicycloïdaux (1) ou d'un module axialement adjacent.

10. Ensemble de trains selon la revendication 9, **caractérisé en ce que** la roue solaire intérieure (2) se compose d'acier et est montée radialement directement sur une douille palier constituée d'aluminium au sur un composant (36) d'un module axialement adjacent (29) en aluminium, la douille palier ou le composant (36) étant disposé(e) de manière solidaire en rotation essentiellement sans jeu radial sur l'arbre de boîte de vitesses central (2).

11. Ensemble de trains selon les revendications 9 et 10, **caractérisé en ce que** le support de couronne dentée (39) se compose d'aluminium et est monté radialement avec le moyeu de palier associé (73) directement sur un arbre de palier (74) de la roue solaire intérieure (2).

12. Ensemble de trains selon l'une quelconque des revendications 2 à 5, **caractérisé en ce que** le porte-satellites commun (19) est monté radialement avec un moyeu de palier associé (76) sur un arbre de palier (78) du composant à roue dentée commun (8) monté centralement par le biais du support (10, 10').

13. Ensemble de trains selon la revendication 12, **caractérisé en ce que** le support de couronne dentée (39) est monté radialement en position radialement adjacente au support sur palier radial du porte-satellites commun (19) au niveau d'un moyeu de palier associé (79) sur un arbre de palier (81) du porte-satellites commun (19).

14. Ensemble de trains selon la revendication 12 ou 13, **caractérisé en ce que** le support de couronne dentée (39) se compose d'aluminium et est pourvu radialement à l'intérieur d'un moyeu de palier (73), dans lequel la roue solaire intérieure (2) constituée d'acier est supportée directement radialement avec un arbre de palier (74).

15. Ensemble de trains selon l'une quelconque des revendications 2 à 5, **caractérisé en ce que** le porte-satellites commun (5', 19) est monté radialement sur un moyeu de palier associé (82, 82') sur un arbre de palier (83, 83') du support monté centralement (10).

16. Ensemble de trains selon la revendication 15, **caractérisé en ce que** le porte-satellites commun (5', 19) se compose d'aluminium et est monté radialement au niveau d'un moyeu de palier disposé radialement à l'intérieur (82) directement sur un disque coudé (84) en acier, supporté sur un arbre de palier (83) du support monté centralement (10), d'un palier axial (85) disposé entre le porte-satellites (5') et le support (10).

17. Ensemble de trains selon la revendication 15, **caractérisé en ce que** le porte-satellites commun (5', 19) se compose d'aluminium et est monté radialement au niveau d'un moyeu de palier (82') disposé radialement à l'intérieur directement sur un arbre de palier (83') du support (10) constitué d'acier.

18. Ensemble de trains selon l'une quelconque des revendications 6 à 8, **caractérisé en ce que** le support de couronne dentée (39) est monté radialement au niveau d'un moyeu de palier associé (79) sur un arbre de palier (80) du porte-satellites (19) commun monté centralement.

19. Ensemble de trains selon l'une quelconque des revendications 12 à 14, ou 18, **caractérisé en ce que** la denture d'entraînement (9) est réalisée avec un jeu radial entre le composant à roue dentée commun (8) et le support (10) pour éviter un déplacement forcé.

20. Ensemble de trains selon l'une quelconque des revendications 13, 14 ou 18, **caractérisé en ce que** la denture d'entraînement (38) est réalisée avec un jeu radial entre la couronne dentée extérieure (13) et le support de couronne dentée (39) pour éviter un déplacement forcé.
